(19) Europäisches Patentamt
European Patent Office
Office européen des brevets

(11) **EP 0 917 070 B1**

(12) **EUROPEAN PATENT SPECIFICATION**

(45) Date of publication and mention
of the grant of the patent:
**14.07.2010 Bulletin 2010/28**

(51) Int Cl.:
***G06F 17/14*** (2006.01)   ***G06T 9/00*** (2006.01)
***H04N 7/30*** (2006.01)

(21) Application number: **98309412.9**

(22) Date of filing: **17.11.1998**

(54) **Method and apparatus for performing discrete cosine transformation and its inverse**

Verfahren und Gerät zur Durchführung der Diskreten-Cosinus-Transformation und inversen Diskreten-Cosinus-Transformation

Méthode et appareil pour exécuter la transformation discrète du cosinus et pour la transformation discrète inverse du cosinus

(84) Designated Contracting States:
**AT BE CH CY DE DK ES FI FR GB GR IE IT LI LU MC NL PT SE**

(30) Priority: **17.11.1997  US 971904**
**17.11.1997  US 971328**

(43) Date of publication of application:
**19.05.1999  Bulletin 1999/20**

(73) Proprietor: **SONY ELECTRONICS, INC.**
**Park Ridge,**
**New Jersey 07656 (US)**

(72) Inventors:
• **Chang, Ching Fang**
**San Jose,**
**95129 California (US)**
• **Lee, C C**
**Fremont,**
**94539 California, (US)**
• **Yanagihara, Naofumi**
**Tokyo (JP)**

(74) Representative: **Smith, Samuel Leonard**
**J.A. Kemp & Co.**
**14 South Square**
**Gray's Inn**
**London WC1R 5JJ (GB)**

(56) References cited:
**EP-A- 0 506 111    DE-A- 4 005 830**
**US-A- 4 385 363    US-A- 4 912 668**
**US-A- 5 341 318    US-A- 5 574 661**

• **LOEFFER C ET AL: "Practical fast 1-D DCT algorithms with 11 multiplications" PROCEEDINGS OF THE IEEE INTERNATIONAL CONFERENCE ON ACOUSTICS SPEECH AND SIGNAL PROCESSING, 1989, pages 988-991, XP010082573**
• **YAMAMITSU C ET AL: "AN EXPERIMENTAL STUDY FOR A HOME-USE DIGITAL VTR" IEEE TRANSACTIONS ON CONSUMER ELECTRONICS, IEEE INC. NEW YORK, US, vol. 35, no. 3, 1 August 1989 (1989-08-01), pages 450-457, XP000065969 ISSN: 0098-3063**

EP 0 917 070 B1

**Description**

The present invention relates generally to methods and apparatus for data compression and decompression, and in particular, is directed to methods and systems for performing the discrete cosine transform (DCT) and weighting processes of a digital video encoder and the inverse weighting and inverse discrete cosine transform (IDCT) processes of a digital video decoder.

Digital video is the term used to describe video signals represented in digital form Digital video offers several advantages over traditional analog systems. For example, recordings of digital video signals can be copied indefinitely without significant loss of quality. Also, compressed digital video signals may require less storage space than analog recordings for the same or better picture quality. Finally, digital formats allow audio, video, and other data to be easily combined, edited, stored, and transmitted.

A direct conversion into digital format of analog video signals having fast frame rates, many colors, and high resolution, however, results in digital video signals with a high data rate, creating difficulties for storage and transmission. Many digital video systems, therefore, reduce the amount of digital video data by employing data compression techniques that are optimized for particular applications. Digital compression devices are commonly referred to as encoders; devices that perform decompression are referred to as decoders. Devices that perform both encoding and decoding are referred to as codecs.

The "DV" format is an industry digital video format specification for use primarily in consumer-level video tape recorders (VTRs). The specification for DV format has been adopted by most of the major manufacturers of high-quality digital video cassette recorders (DVCRs) and digital video camcorders. See Specifications of Consumer-Use Digital VCRs, HD Digital VCR Conference, December 1994. The DV format is currently used in such commercially available products as digital camcorders.

Video displays have traditionally consisted of a series of still pictures, or "frames", painted by scan lines and sequentially displayed at a rate of, for example, thirty frames per second to provide the illusion of continuous motion. Each frame consists of a pair of interlaced "fields." A field contains half the number of lines of a frame. Fields are interleaved with lines from either a previous or subsequent field to create a frame. When storing or transmitting video data, the amount of data may be reduced by taking advantage of redundancy within fields (intrafield) or between neighboring fields (interfield). DV format uses both intrafield and interfield data reduction.

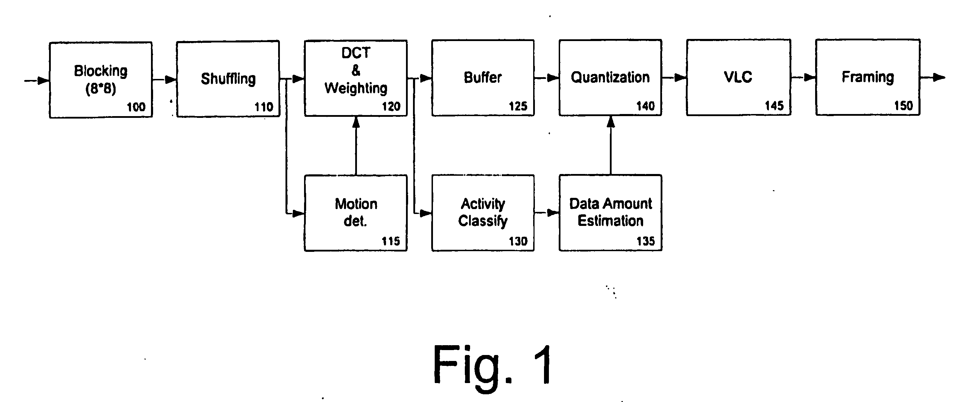

Fig. 1 is a basic flow diagram showing the encoding, or data compression, process of a prior art digital video codec. Codecs employing DV format use a DCT-based data compression method. In the blocking operation, the image frame is divided into N by N blocks of pixel information including, for example, brightness and color data for each pixel (Stage 100). A common block size is eight pixels horizontally by eight pixels vertically. The pixel blocks are then "shuffled" so that several blocks from different portions of the image are grouped together (Stage 110). Shuffling enhances the uniformity of image quality.

Different fields are recorded at different time incidents. If a video scene involves lots of motion, the two fields within a frame contain significantly different image information, and DV encoders use an intrafield data reduction process to remove redundancy within a field.

In video images without substantial motion, the two fields of a frame contain similar image information, and DV encoders use an interfield data reduction process to remove redundancy between fields. For each block of pixel data, a motion detector looks for the difference between two fields of a frame (Stage 115). The motion information is sent to the next processing operation (Stage 120).

In stage 120, pixel information is transformed using a DCT. There are at least two common DCT modes: 8-8 (or 8-point) DCT mode and 2-4-8 DCT mode. The 8-8 DCT mode refers to a DCT that takes eight inputs and returns 8 outputs in both vertical and horizontal directions. In the 2-4-8 DCT mode, an 8 by 8 block of data is divided into two 4 by 8 fields [and a] 4 by 8 transform is performed on each field. Each 4 by 8 field consists of 4 horizontal lines with 8 pixels in each horizontal line. The 4 by 8 transform takes 4 inputs and returns 4 outputs in the vertical direction, and takes 8 inputs and returns 8 outputs in the horizontal direction. The DV format specification recommends that the 8-8 DCT mode be used when the difference between two fields is small. By contrast, the 2-4-8 DCT mode should be used when two fields differ greatly.

In the 8-point DCT mode, 8 x 8 blocks of pixel information are transformed into 8 x 8 matrices of corresponding frequency coefficients using a 2-dimensional DCT. In the following equations, $P(x,y)$ represents an input block of pixel information with symbols x and y representing pixel coordinates in the DCT block. $Q'(h,v)$ represents the resulting output block of DCT coefficients. The DCT]may be described mathematically as follows:

$$Q'(h,v) = C(h)\ C(v)\ \sum_{y=0}^{7}\ \sum_{x=0}^{7}\ P(x,y)\ COS\left(\frac{\pi h(2x+1)}{16}\right)\ COS\left(\frac{\pi v(2y+1)}{16}\right)$$

for h = 0, 1, ... 7 and v=0,1,...7 where

$$C(h) = \begin{cases} \dfrac{1}{2\sqrt{2}}, & h = 0 \\ \dfrac{1}{2}, & h=1\ to\ 7 \end{cases}$$

and

$$C(v) = \begin{cases} \dfrac{1}{2\sqrt{2}}, & v = 0 \\ \dfrac{1}{2}, & v=1\ to\ 7 \end{cases}$$

The DCT coefficients are then weighted by multiplying each block of DCT coefficients by weighting constants (Stage 124). This process may be described mathematically as follows:

$$Q\ (h,\ v) = W\ (h,\ v)\ Q'\ (h,\ v)$$

The following weighting coefficients are standard for the DV format.

$$W(h,v) = \begin{cases} 1/4 & h=0,\ v=0 \\ w(h)w(v)/2, & others \end{cases}$$

where

w (0) = 1
w (1) = CS4/ (4 x CS7 x CS2)
w (2) = CS4/ (2 x CS6)
w (3) = 1/(2x CS5)
w (4) = 7/8
w (5) = CS4/CS3
w (6) = CS4/CS2
w (7) = CS4/CS1

and

CSm = COS (mΠ/16).

The weighted DCT coefficients, Q(h,v), are stored to a buffer (Stage 125).

The weighted DCT coefficients are quantized in the next operation (Stage 140). Quantization increases the efficiency of video data transmission, but may result in error propagation. To reduce the magnitude of errors, each DCT block is classified into one of four activity classes described in the DV format specification (Stage 130). The four classes represent four different quantizing schemes. The amount of data in the variable length codeword using each quantizer is estimated (Stage 135) and the quantizer that best will compress one or more successive weighted DCT coefficients into a same size block as a synchronization block is selected.

Quantization rounds off each DCT coefficient within a certain range of values to be the same number (Stage 140). Quantizing tends to set the higher frequency components of the frequency matrix to zero, resulting in much less data to be stored. Since the human eye is most sensitive to lower frequencies, however, very little perceptible image quality is lost by this operation.

Quantization stage 140 includes converting the two-dimensional matrix of quantized coefficients to a one-dimensional linear stream of data by reading the matrix values in a zigzag pattern and dividing the one-dimensional linear stream of quantized coefficients into segments, where each segment consists of a string of zero coefficients followed by a non-zero quantized coefficient. Variable length coding (VLC) is performed by transforming each segment, consisting of the number of zero coefficients and the amplitude of the non-zero coefficient in the segment, into a variable length codeword (Stage 145). Finally, a framing process packs every 30 blocks of variable-length coded quantized coefficients into five fixed-length synchronization blocks (Stage 150).

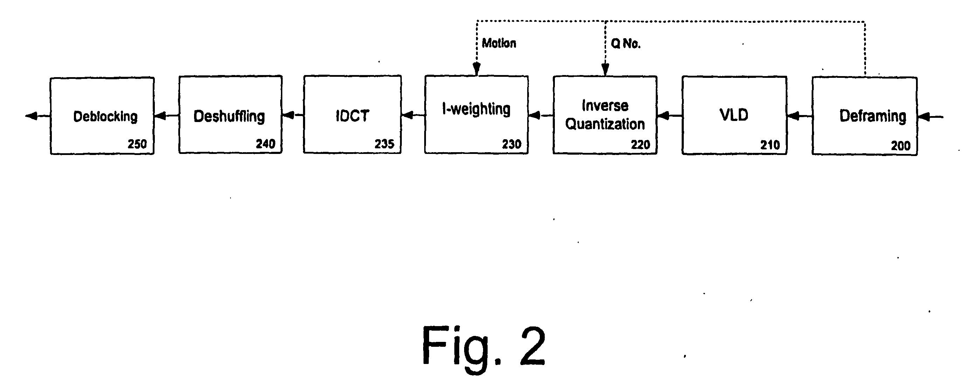

Fig. 2 shows a basic flow diagram of a prior art DV codec decoding process. Decoding is essentially the reverse of the encoding process described above. The digital stream is first deframed (Stage 200). Variable length decoding (VLD) then unpacks the data so that it may be restored into individual coefficients (Stage 210).

After inverse quantizing the coefficients (Stage 220), inverse weighting (Stage 230) and an inverse discrete cosine transform (IDCT) (Stage 235) are applied to the result. The inverse weights W'(h,v) are the multiplicative inverses of the weights W(h,v) that were applied in the encoding process. The inverse weighting process may be described mathematically as follows, where Q(h,v) represents the input coefficients.

$$Q'(h, v) = W'(h,v)\, Q(h, v)$$

The following inverse weighting coefficients are standard for the DV format.

$$W'(h,v) = \begin{cases} 4 & h=0, v=0 \\ 2/(w(h)w(v)), & others \end{cases}$$

where

w (0) = 1
w (1) = CS4/ (4 x CS7 x CS2)
w (2) = CS4/ (2 x CS6)
w (3) = 1/(2x CS5)
w (4) = 7/8
w (5) = CS4/CS3
w (6) = CS4/CS2
w (7) = CS4/CS1

where

CSm = COS (mΠ/16).

The output, Q'(h,v), of the inverse weighting function is then processed by the IDCT. The IDCT process is described mathematically as follows:

$$P(x,y) = \sum_{v=0}^{7} \sum_{h=0}^{7} \left( C(v)C(h)\, Q'(h,v)\, COS\left(\frac{\pi v(2y+1)}{16}\right) COS\left(\frac{\pi h(2x+1)}{16}\right) \right)$$

For x = 0, 1 ... 7, and y = 0, 1, ... 7,

*where*

$$C(h) = \begin{cases} \dfrac{1}{2\sqrt{2}}, & h = 0 \\ \dfrac{1}{2}, & h = 1 \text{ to } 7 \end{cases}$$

*and*

$$C(v) = \begin{cases} \dfrac{1}{2\sqrt{2}}, & v = 0 \\ \dfrac{1}{2}, & v = 1 \text{ to } 7 \end{cases}$$

The result is then deshuffled (Stage 240) and deblocked (Stage 250) to form the full image frame.

There has been much emphasis on producing efficient implementations of DCT-based data compression and decompression techniques. U.S. Patent No. 4,385,363 to Widergren et al., for example, discloses a DCT processor for transforming 16 by 16 pixel blocks. The five-step process described in the '363 patent is optimized for a hardware implementation using 16 inputs and is not readily adaptable for 8 inputs, nor is it efficient when implemented using software.

U.S. Patent No. 5,574, 661 to Cismas describes an apparatus and method for calculating an inverse discrete cosine transform. The '661 patent discloses primarily a hardware implementation in which the process of performing the IDCT on 8 inputs requires only one multiplier. Neither the '363 patent nor the '661 patent discuss combining the weighting and transform processes. Furthermore, neither of these patents are easily extensible to applications intended for the DV format.

Some researchers have suggested that combining the weighting and DCT processes together reduces the number of multiplications, thereby increasing the speed of most software and hardware implementations of encoders and decoders. See, e.g., C. Yamamitsu et al., "An Experimental Study for Home-Use Digital VTR," IEEE Transactions on Consumer Electronics, Vol. 35, No. 3, August 1989, pp. 450-456. Yamamitsu et al. discusses combining a sample weighting function with DCT and IDCT processes to produce a "modifies DCT" and "modified IDCT," each of which requires fewer multiplications than its two component functions when performed consecutively. The modified DCT and IDCT disclosed in the Yamamitsu et al. paper, however, do not use the standard weights for the DV format.

One conventional method of implementing 2-4-8 DCT and weighting or inverse weighting and 2-4-8 IDCT is to use two operations, requiring a total of either 17 or 21 operations. The weighting and inverse weighting processes each require three multiplications in the vertical direction and seven multiplications in the horizontal direction. The 4-point DCT or 4-point IDCT each requires three multiplications. Each 8-point DCT or 8-point IDCT requires eleven multiplications. One conventional way of implementing 8-point DCT and weighting or inverse weighting and 8-point IDCT is to use two operations with a total of 18 multiplications. The weighting and inverse weighting processes each require 7 multiplications and is followed by an 8-point DCT or 8-point IDCT each requiring 11 multiplications. See, *e.g.*, C. Loeffler et al., "Practical Fast I-D DCT Algorithms with 11 Multiplications," Proceedings of the IEEE International Conference on Acoustics, Speech, and Signal Processing, ICASSP-89, pp. 988-991, 1989.

The present invention reduces DCT-based compression time and decompression time by providing methods and apparatus for a combined weighting/DCT function of a DV encoder that minimize the number of multiplications. Finally, the present invention provides methods and apparatus for a combined IDCT/inverse weighting function of a DV decoder that minimize the number of multiplications.

DE 40 05 830 A describes a device which calculates a discrete cosine transformation from a quantity of real data in digital form and adapts to image processing. The number of phases in the calculation depends on the figure 2n of digital data. There is at least one phase from 2n-2 parallel calculations, which comprise four pieces of input data. Each calculation covers a) two additions/subtractions to/from two of the four pieces of input data, in order to produce intermediate terms, b) two multiplications in the two intermediate terms, which have been retained through the subtraction in step a), with factors C3.(C2)-1 or C1.(C2)-1, c) two additions/subtractions in the results from steps a) and b), d) a multiplication of one of the subtractive terms, which have been retained in step c), with the factor C2, e) in addition of the subtractive term which in step d) has been multiplied with the factor C2 and of the corresponding additive term. Thus, the transformation output coefficients comprise the result of the addition in step e), the allocated additive terms and the remaining additive and subtractive terms, which have been retained during step c), causing each of the factors Ci to equal 1/(2 cos ipi/8).

US-A-5 341 318 describes a digital video compression system and an apparatus implementing this system. Specifically, matrices of pixels in the RGB signal format are converted into YUV representation, including a step of selectively sampling the chrominance components. The signals are then subjected to a discrete cosine transform (DCT). A circuitry implementing the DCT in a pipelined architecture is provided. A quantization step eliminates DCT coefficients having amplitude below a set of preset thresholds. The video signal is further compressed by coding the elements of the quantized matrices in a zig-zag manner. This representation is further compressed by Huffman codes. Decompression of the signal is substantially the reverse of compression steps. The inverse discrete cosine transform (IDCT) may be implemented by the DCT circuit. Circuits for implementing RGB to YUV conversion, DCT, quantization, coding and their decompression counterparts are disclosed. The circuits may be implemented in the form of an integrated circuit chip.

According to the present invention there is provided a method for performing data compression, a data compression system, a method for performing data decompression and a data decompression system as defined in appended claims 1, 3, 5 and 7 and in appended claims 9, 11, 13 and 15.

The invention will be further described by way of example with reference to the accompanying drawings, in which:

Fig. 1 is a basic flow diagram of a prior art digital video encoder;
Fig. 2 is a basic flow diagram of a prior art digital video decoder;
Fig. 3 is a flow diagram illustrating in detail a one-dimensional combined discrete cosine transformation/weighting (DCT/W) process consistent with the present invention;
Fig. 4 is a flow diagram illustrating in detail a one-dimensional combined inverse weighting/inverse discrete cosine transformation (IW/IDCT) process consistent with the present invention;
Fig. 5 is a flow diagram illustrating in detail a one-dimensional combined discrete cosine transformation/weighting (DCT/W) process consistent with the present invention;
Fig. 6 is a flow diagram illustrating in detail a one-dimensional combined inverse weighting/inverse discrete cosine transformation (IW/IDCT) process consistent with the present invention;
Fig. 7 shows a system for carrying out a method consistent with the present invention.
Fig. 8 shows a nine processor data compression system consistent with the present invention;
Fig. 9 shows a nine processor data decompression system consistent with the present invention;
Fig. 10 shows a five processor data compression system consistent with the present invention; and
Fig. 11 shows a five processor data decompression system consistent with the present invention.

Reference will now be made in detail to preferred implementations consistent with the present invention, an example of which is illustrated in the accompanying drawings.

### A. Compression in 8-point mode

Mathematically, the DCT process may be combined with the weighting process. The standard DCT equation for DV format is as follows.
For h = 0, 1,...7 and v=0,1, ...7:

$$Q'(h,v) = C(h)\,C(v) \sum_{y=0}^{7} \sum_{x=0}^{7} \left( P(x,y)\,\cos\left(\frac{\pi h(2x+1)}{16}\right)\cos\left(\frac{\pi v(2y+1)}{16}\right)\right)$$

where

$$C(h) = \begin{cases} \dfrac{1}{2\sqrt{2}}, & h = 0 \\ \dfrac{1}{2}, & h=1 \text{ to } 7 \end{cases}$$

*and*

$$C(v) = \begin{cases} \dfrac{1}{2\sqrt{2}}, & v = 0 \\ \dfrac{1}{2}, & v = 1 \text{ to } 7 \end{cases}$$

In the DCT equation above, P(x,y) represents pixel information and is the input to the DCT. Q'(h,v) represents the outputted DCT coefficients that, in a two-operation DCT/weighting process, become the input to the weighting function.

The standard weighting function for DV format is defined as:

$$Q(h,v) = W(h,v)\, Q'(h,v)$$

where Q'(h,v) is the input to the weighting function and Q(h,v) is the outputted weighted coefficients. The weighting constants are as follows:

$$W(h,v) = \begin{cases} 1/4 & h=0, v=0 \\ (w(h)w(v))/2, & others \end{cases}$$

where

w (0) = 1
w (1) = CS4/ (4 x CS7 x CS2)
w (2) = CS4/ (2 x CS6)
w (3) = 1/(2x CS5)
w(4)=7/8
w (5) = CS4/CS3
w (6) = CS4/CS2
w (7) = CS4/CS1

and

CSm = COS (mΠ/16).

If Q"(h,v) is then defined as follows,

$$Q''(h,v) = \begin{cases} 2\,Q(h,v) & h=0, v=0 \\ Q(h,v) & others \end{cases}$$

where Q(h,v) represents the final desired weighted DCT coefficients and Q"(h,v) is an intermediate representation, it is mathematically equivalent to say that:

$$Q''(h,v) = \frac{w(h)w(v)}{2}\, C(h)\, C(v) \sum_{y=0}^{7} \sum_{x=0}^{7} P(x,y) \cos\left(\frac{\pi h(2x+1)}{16}\right) \cos\left(\frac{\pi v(2y+1)}{16}\right)$$

If C'(h) and C'(v) are defined as follows

$$C'(h) = 2\sqrt{2}\, C(h) = \begin{cases} 1, & h=0 \\ \sqrt{2}, & h=1\ to\ 7 \end{cases}$$

and

$$C'(v) = 2\sqrt{2}\, C(v) = \begin{cases} 1, & v = 0 \\ \sqrt{2}, & v = 1\ to\ 7 \end{cases}$$

and substituted for C(h) and C(v), Q"(h,v) can be further represented as follows:

$$Q''(h,v) = \frac{1}{16} C'(v)\, w(v) \sum_{y=0}^{7}\left( COS\frac{\pi v(2y+1)}{16}\left[ C'(h)\, w(h) \sum_{x=0}^{7} P(x,y)\ COS\left(\frac{\pi h(2x+1)}{16}\right)\right]\right)$$

$$\underbrace{\hspace{5cm}}_{\text{horizontal 8-point 1-D DCT/weighting}}$$

$$\underbrace{\hspace{7cm}}_{\text{vertical 8-point 1-D DCT/weighting}}$$

The result is a formula for the combination of the two-dimensional DCT and the weighting function using standard DV format weights. As indicated above, the two-dimensional DCT can be performed as two one-dimensional processes. In the equation above, an 8-point 1-D DCT/weighting process is performed first on the horizontal coordinates. The result is used as input to the second 1-D DCT/weighting process on the vertical coordinates.

Alternatively, Q"(h,v) may be factored as follows:

$$Q''(h,v) = \frac{1}{16} C'(h)\, w(v) \sum_{x=0}^{7}\left( COS\frac{\pi h(2x+1)}{16}\left[ C'(v)\, w(h) \sum_{y=0}^{7} P(x,y)\ COS\left(\frac{\pi v(2y+1)}{16}\right)\right]\right)$$

$$\underbrace{\hspace{5cm}}_{\text{vertical 8-point 1-D DCT/weighting}}$$

$$\underbrace{\hspace{7cm}}_{\text{horizontal 8-point 1-D DCT/weighting}}$$

This second equation indicates that it is also mathematically equivalent to perform the 1-D DCT/weighting process first on the vertical coordinates and use the result as input to the second 1-D transform on the horizontal coordinates.

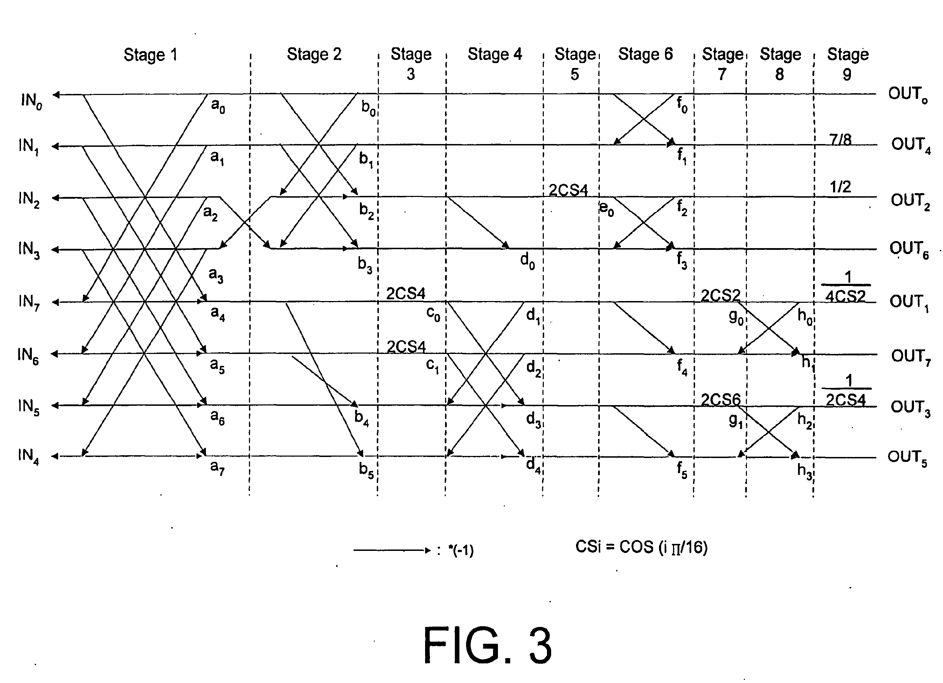

Fig. 3 is a diagram also known as a "butterfly diagram". Fig. 3 shows the one-dimensional combined DCT/weighting process of the present invention as a nine-operation pipeline converting eight inputs $IN_0$ - $IN_7$ to eight outputs $OUT_0$ - $OUT_7$. In the diagram, input data flows from left to right. A diagonal line connecting two inputs indicates that the inputs are added together. An arrowhead indicates that the additive inverse of the result at the point of the arrow head is computed before the next calculation. A constant placed above a line segment indicates that the result at the left end of the line segment is multiplied by the indicated constant. The notation CSi represents the calculation CSi= COS ($i\pi$/16). For example, 2CS2CS4= 2COS($2\pi$/16) COS($4\pi$/16), which equals 2 COS($\pi$/8) COS($\pi$/4) when mathematically

reduced.

Pixel value components referred to above as P(x,y) are processed twice by a processor executing the combined DCT/weighting process, once using the horizontal x-coordinates as input and once using the vertical y-coordinates as input. As.mentioned earlier, the order in which the two transforms are performed is immaterial. The present invention will be described by performing the transform first on the horizontal x-coordinates.

The transformation process begins with eight inputs representing the horizontal pixel components of P(x,y). In operation one, the eight inputs $IN_0$ - $IN_7$ are combined pairwise, as shown in Fig. 3, to obtain first intermediate values $a_0$- $a_7$. Combinations are performed using addition and subtraction (or addition by the additive inverse). In operation two, subsets of the first intermediate values are combined to obtain second intermediate values $b_0$ - $b_5$. In operation three, intermediate values $a_4$ and $a_5$ are multiplied by a constant to obtain third intermediate values, $c_0$ and $c_1$. In operation four, a subset of the intermediate values, $b_0$ - $b_5$, $c_0$ and $c_1$, are pairwise combined to obtain fourth intermediate values, $d_0$ - $d_4$. In operation five, intermediate values $b_2$ and $d_0$ are multiplied by constants or shifted to obtain fifth intermediate values, $e_0$ and $e_1$. Operation six consists of multiple pairwise combinations of previously obtained intermediate values to obtain sixth intermediate values $f_0$ - $f_5$. Intermediate values are multiplied by constants or shifted in operation seven to obtain the seventh set of intermediate values, $g_0$ - $g_3$. In operation eight, another pairwise combination is performed resulting in intermediate values, $h_0$ - $h_3$. Finally, in operation nine, selected intermediate values are multiplied by constants or shifted to obtain eight output values, $OUT_0$-$OUT_7$. The output values are then used as input to a second 1-D DCT/weighting transform identical to Fig. 3.

Following the second transform, the input matrix of pixel information is a matrix of coefficients, each coefficient representing a weighting of that portion of the total image. The implementation shown in Fig. 3 only requires eight multiplications and one shift operation. The calculations in the butterfly diagram of Fig. 3 can be scaled without changing the present invention. In particular, a scaling factor can be applied to any operation provided that it is consistently applied so as to preserve the mathematical relationship between the output data.

**B. Decompression in 8-point mode**

The IDCT may be combined with an inverse weighting process that is basically an inverse of the compression process. First, the coefficient information is subjected to an inverse weighting process. If Q(h,v) represents weighted coefficient information, then the inverse weighting process may be described mathematically as follows:

$$Q'(h, v) = W'(h, v) \, Q(h, v)$$

where Q(h,v) represents the input to the inverse weighting function and Q'(h,v) is the output of the inverse weighting function.

The weights used in the inverse process of the DV format are the same as those used in the compression process described earlier, namely:

$$W'(h,v) = \begin{cases} 4 & h=0, v=0 \\ 2/(w(h)w(v)), & others \end{cases}$$

where

w (0) = 1
w (1) = CS4/ (4 x CS7 x CS2)
w (2) = CS4/ (2 x CS6)
w (3) = 1/(2x CS5)
w (4) = 7/8
w (5) = CS4/CS3
w (6) = CS4/CS2
w (7) = CS4/CS1

and

CSm = COS (mΠ/16).

Additionally, the mathematical representation for the standard IDCT equation for DV format is as follows:
For x = 0, 1, ... 7, and y = 0, 1, ... 7,

$$P(x,y) = \sum_{v=0}^{7} \sum_{h=0}^{7} \left( C(v)C(h) Q'(h,v) \cos\left(\frac{\pi v(2y+1)}{16}\right) \cos\left(\frac{\pi h(2x+1)}{16}\right) \right)$$

where $Q'(h, v)$ is the output of the inverse weighting function used as input to the IDCT. In the equation above, the output P(x,y) consists of pixel information representing the decoded image. Also, in the equation above,
*and*

$$C(v) = \begin{cases} \dfrac{1}{2\sqrt{2}}, & v = 0 \\ \dfrac{1}{2}, & v = 1 \text{ to } 7 \end{cases}$$

$$C(h) = \begin{cases} \dfrac{1}{2\sqrt{2}}, & h = 0 \\ \dfrac{1}{2}, & h = 1 \text{ to } 7 \end{cases}$$

To combine the inverse weighting function and the IDCT, first substitute $W'(h, v) Q(h, v)$ for $Q'(h, v)$ in the IDCT equation. The result is a formula describing a combined inverse weighting/IDCT process.

$$P(x,y) = \sum_{v=0}^{7} \sum_{h=0}^{7} \left( C(v)C(h) W'(h,v) Q(h,v) \cos\left(\frac{\pi v(2y+1)}{16}\right) \cos\left(\frac{\pi h(2x+1)}{16}\right) \right)$$

Next, define

$$Q''(h,v) = \begin{cases} 2\,Q(h,v) & h=0, v=0 \\ Q(h,v) & \text{others} \end{cases}$$

where $Q(h,v)$ is the input to the combined IW/IDCT process and $Q''(h,v)$ is an intermediate representation. After substituting for Q(h,v), the result is:

$$P(x,y) = \sum_{v=0}^{7} \sum_{h=0}^{7} \left( C(v)C(h) \frac{2}{w(h)w(v)} Q''(h,v) \cos\left(\frac{\pi v(2y+1)}{16}\right) \cos\left(\frac{\pi h(2x+1)}{16}\right) \right)$$

Next, define C'(h) = 2√2 C(h), for h = 0 to 7, that is,

$$C'(h) = \begin{cases} 1, & h=0 \\ \sqrt{2}, & h=1 \text{ to } 7 \end{cases}$$

After substituting again, the equation for the combined IDCT/IW process of the present invention is as follows, where Q"(h,v) is the intermediate representation and P(x,y) is the desired pixel information.

$$P(x,y) = \sum_{v=0}^{7} \sum_{h=0}^{7} \left( \frac{1}{4} \cdot \frac{C'(h)\, C'(v)}{w(h)\, w(v)}\, Q''(h,v)\, COS\left(\frac{\pi v(2y+1)}{16}\right) COS\left(\frac{\pi h(2x+1)}{16}\right) \right) =$$

The result is a formula for the combination of the inverse weighting function and the two-dimensional IDCT. As indicated above, the two-dimensional

$$P(x,y) = \frac{1}{4} \sum_{v=0}^{7} \left( \frac{C'(v)}{w(v)}\, COS\, \frac{\pi v(2y+1)}{16} \left[ \sum_{h=0}^{7} \left( \frac{C'(h)}{w(h)}\, COS\, \frac{\pi h(2x+1)}{16}\, Q''(h,v) \right) \right] \right)$$

$$\underbrace{\qquad\qquad}_{\text{horizontal 8-point 1-D IDCT/inverse weighting}}$$

IW/IDCT can be vertical 8-point 1-D IDCT/inverse weighting separated into two 1-D transforms. In the equation above, an 8-point 1-D inverse weighting/IDCT process is performed first on the horizontal coordinates. The result is then used as input to the second 1-D inverse weighting/IDCT process on the vertical coordinates.

Alternatively, Q"(h,v) may be factored as follows:

$$P(x,y) = \frac{1}{4} \sum_{h=0}^{7} \left( \frac{C'(h)}{w(h)}\, COS\, \frac{\pi h(2x+1)}{16} \left[ \sum_{v=0}^{7} \left( \frac{C'(v)}{w(v)}\, COS\, \frac{\pi v(2y+1)}{16}\, Q''(h,v) \right) \right] \right)$$

$$\underbrace{\qquad\qquad}_{\text{vertical 8-point 1-D IDCT/inverse weighting}}$$

$$\underbrace{\qquad\qquad}_{\text{horizontal 8-point 1-D IDCT/inverse weighting}}$$

The equation above indicates that it is also mathematically equivalent to perform the 1-D inverse weighting)/IDCT process on the vertical coordinates and use the result as input to the second 1-D transform on the horizontal coordinates.

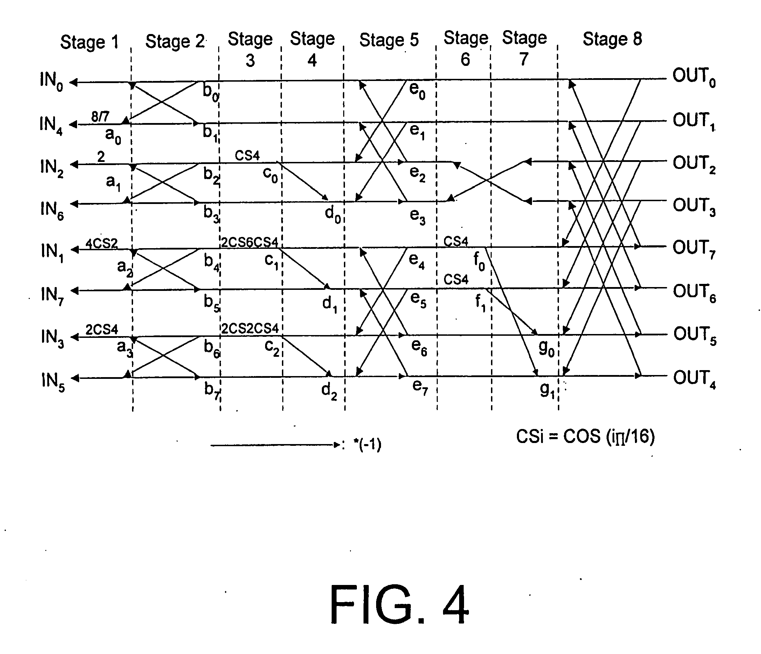

Fig. 4 illustrates a one-dimensional combined inverse weighting/IDCT process consistent with the present invention. The combined inverse weighting/IDCT process may be implemented as an eight-operation pipeline as depicted by the butterfly diagram of Fig. 4.

In the inverse process, the weighted coefficients referred to above as Q"(h,v) are processed twice by the combined inverse weighting/IDCT processor, once using the horizontal h-coordinates as input and once using the vertical v-coordinates as input. The order in which the two transforms are performed is immaterial. For sake of this explanation, the present invention will be described by performing the transform first on the horizontal h-coordinates.

The transformation process begins with eight inputs $I_0 - I_7$ representing the horizontal components of Q"(h,v). In operation one, the eight inputs are either multiplied by constants or shifted to obtain first intermediate values, $a_0-a_1$. In operation two, combinations are performed using addition and subtraction (or addition by the additive inverse) to obtain intermediate values, $b_0- b_7$. In operation three, selected intermediate values $b_2$, $b_4$ and $b_6$ are multiplied by constants or shifted to obtain a third set of intermediate values, $c_0- c_2$. In operation four, intermediate values are pairwise combined to obtain fourth intermediate values, $d_0 - d_2$. Operation five consists of multiple pairwise combinations of previously obtained intermediate values resulting in fifth intermediate values, $e_0 - e_7$. In operation six, intermediate values $e_4$ and $e_5$ are multiplied by constants to obtain sixth intermediate values $f_0$ and $f_1$. Operation seven involves two pairwise combinations to obtain seventh intermediate values $g_0$ and $g_1$. Finally, in operation eight another set of pairwise combinations of previously obtained intermediate values is performed to obtain eight output values $OUT_0$ - $OUT_7$. The output values are then used as input to a second 1-D inverse weighting/IDCT transform.

Following the second transform, the result is a matrix of pixel information The combined inverse weighting/IDCT function as implemented in Fig. 4 requires only eight multiplications and one shift operation. The calculations in the butterfly diagram of Fig. 4 can be scaled without changing the present invention. In particular, a scaling factor can be applied to any operation provided that it is consistently applied so as to preserve the mathematical relationship between the output data.

## C. Compression in 2-4-8 DCT mode

In the 2-4-8 DCT mode, the 8x8 block of pixel information is first divided into two 4x8 blocks. Then, a 4x8 DCT is performed on each 4x8 block. Mathematically, the DCT process may be combined with the weighting process. The standard 2-4-8 DCT equation for DV format is as follows.
For h = 0, 1,...7 and v = 0,1, ... 3:

$$\cdot\ ''(h,v) = C(h)\,C(v)\sum_{m=0}^{3}\sum_{x=0}^{7}(P(x,2m)+P(x,2m+1))\,COS\left(\frac{\pi h(\pi x+1)}{16}\right)COS\left(\frac{\pi v(2m+1)}{8}\right)$$

$$\cdot\ ''(h,v+4) = C(h)\,C(v)\sum_{m=0}^{3}\sum_{x=0}^{7}(P(x,2m)-P(x,2m+1))\,COS\left(\frac{\pi h(2h+1)}{16}\right)COS\left(\frac{\pi v(2m+1)}{8}\right)$$

where

$$C(h) = \begin{cases} \dfrac{1}{2\sqrt{2}}, & h = 0 \\ \dfrac{1}{2}, & h=1\ to\ 7 \end{cases}$$

and

$$C(v) = \begin{cases} \dfrac{1}{2\sqrt{2}}, & v = 0 \\ \dfrac{1}{2}, & v=1\ to\ 7 \end{cases}$$

In the DCT equation above, P(x,y) represents pixel information and is the input to the DCT. In particular, P(x,2m) + P(x,2m+1) indicates that the input to the first DCT is a 4 x 8 matrix, where each row is the sum of a pair of rows of an 8 x 8 matrix of pixel information. Similarly, in the second equation, P(x,2m) - P(x,2m+1) indicates that the input to the second DCT is a 4 x 8 matrix, where each row is the difference of a pair of rows of the 8 x 8 input matrix of pixel information. Q'(h,v) represents the outputted DCT coefficients that, in a two-operation DCT/weighting process, become the input to the weighting function.

The standard weighting function for DV format is defined as:

$$Q(h,v) = W(h,v)\ Q'(h,v)$$

where Q'(h,v) is the input to the weighting function and Q(h,v) is the outputted weighted coefficients. The weighting constants are as follows:

$$W(h,v) = \begin{cases} \dfrac{1}{4} & ,h=0 \ ,v=0 \\[2mm] \dfrac{(w(h)\,w(2v))}{2} & ,0<v<4 \\[2mm] \dfrac{(w(h)\,w(2(v-4)))}{2} & ,4 \le v<7 \end{cases}$$

where

w (0) = 1
w (1) = CS4/(4 x CS7 x CS2)
w (2) = CS4/(2 x CS6)
w (3) = 1/(2x CS5)
w (4) = 7/8
w (5) = CS4/CS3
w (6) = CS4/CS2
w (7) = CS4/CS1

and

CSm = COS (mΠ/16).

If Q"(h,v) is then defined as follows,

$$Q''(h,v) = \begin{cases} 2\,Q(h,v) & h=0,v=0 \\ Q(h,v) & others \end{cases}$$

where Q(h,v) represents the final desired weighted DCT coefficients and Q"(h,v) is an intermediate representation, it is mathematically equivalent to say that:

$$Q''(h,v) = \frac{w(h)\,w(2v)}{2}\,C(h)\,C(v)\sum_{m=0}^{3}\sum_{x=0}^{7}(P(x,2m)+P(x,2m+1))\,COS\!\left(\frac{\pi h(2x+1)}{16}\right)COS\!\left(\frac{\pi v(2m+1)}{8}\right)$$

$$Q''(h,v+4) = \frac{w(h)\,w(2v)}{2}\,C(h)\,C(v)\sum_{m=0}^{3}\sum_{x=0}^{7}(P(x,2m)-P(x,2m+1))\,COS\!\left(\frac{\pi h(2x+1)}{16}\right)COS\!\left(\frac{\pi v(2m+1)}{8}\right)$$

If C'(h) and C'(v) are defined as follows

$$C'(h) = 2\sqrt{2}\,C(h) = \begin{cases} 1, & h=0 \\ \sqrt{2}, & h=1 \ to \ 7 \end{cases}$$

*and*

$$C'(v) = 2\sqrt{2}\, C(v) = \begin{cases} 1, & v = 0 \\ \sqrt{2}, & v = 1 \text{ to } 7 \end{cases}$$

and substituted for C(h) and C(v), Q"(h,v) and Q"(h,v+4) can be further represented as follows:

$$Q''(h,v) = \frac{1}{16} C'(v) w(2v) \sum_{m=0}^{3} \left\{ \cos\left(\frac{\pi v(2m+1)}{8}\right) \left[ C'(h) w(h) \sum_{x=0}^{7} \cos\left(\frac{\pi h(2x+1)}{16}\right) (P(x,2m) + P(x,2m+1)) \right] \right\}$$

horizontal 8-point 1-D DCT/weighting
of sum information

vertical 4-point 1-D DCT/weighting

$$Q''(h,v+4) = \frac{1}{16} C'(v) w(2v) \sum_{m=0}^{3} \left\{ \cos\left(\frac{\pi v(2m+1)}{8}\right) \cdot \left[ C'(h) w(h) \sum_{x=0}^{7} \cos\left(\frac{\pi h(2x+1)}{16}\right) (P(x,2m) - P(x,2m+1)) \right] \right\}$$

horizontal 8-point 1-D DCT/weighting
of difference information

vertical 4-point 1-D DCT/weighting

The equations above are formulas for the combination of the two-dimensional DCT and the weighting function using standard DV format weights. As indicated above, the two-dimensional (2-D) DCT can be performed as two one-dimensional (1-D) processes. In the first equation above, an 8-point 1-D DCT/weighting process is performed first on the horizontal coordinates of sum information. The result is used as input to the 4-point 1-D DCT/weighting process on the vertical coordinates of sum information. In the second equation above, an 8-point 1-D DCT/weighting process is performed first on the horizontal coordinates of difference information. The result is used as input to the 4-point 1-D DCT/weighting process on the vertical coordinates of difference information.

Alternatively, 0"(h,v) and Q"(h,v+4) may be factored as follows:

$$Q''(h,v) = \frac{1}{16} C'(h) w(h) \sum_{x=0}^{7} \left\{ \cos\left(\frac{\pi h(2x+1)}{16}\right) \left[ C'(v) w(2v) \sum_{m=0}^{3} \cos\left(\frac{\pi v(2m+1)}{8}\right) (P(x,2m) + P(x,2m+1)) \right] \right\}$$

vertical 4-point 1-D DCT/weighting
of sum information

horizontal 8-point 1-D DCT/weighting

$$Q''(h,v+4) = \frac{1}{16} C'(h) w(h) \sum_{x=0}^{7} \left\{ \cos\left(\frac{\pi h(2x+1)}{16}\right) \left[ C'(v) w(2v) \sum_{m=0}^{3} \cos\left(\frac{\pi v(2m+1)}{8}\right) (P(x,2m) + P(x,2m+1)) \right] \right\}$$

<span style="text-align:center">vertical 4-point 1-D DCT/weighting<br>of sum information</span>

<span style="text-align:center">horizontal 8-point 1-D DCT/weighting</span>

This second set of equations indicate that it is also mathematically equivalent to perform a 4-point 1-D DCT/ weighting process first on the vertical coordinates and use the result as input to an 8-point 1-D DCT/weighting process performed on the horizontal coordinates.

All 8-point 1-D DCT/weighting processes mentioned above are of the type described in Section A, above. The 4-point 1-D DCT/weighting process is disclosed in the present invention as follows.

In 2-4-8 DCT mode, the combined DCT/weighting process is also performed twice, once on the 4 x 8 block of sum information and once on the 4 x 8 block of difference information. For each block, pixel value components referred to above as $P(x,y)$ are processed twice by processors executing the combined DCT/weighting process, once performing a 4-point DCT/weighting process on the vertical y-coordinates and once performing an 8-point DCT/weighting process on the horizontal y-coordinates. As mentioned earlier, the order in which the two transforms are performed is immaterial. The present invention will be described by performing a 4-point DCT/weighting process followed by an 8-point DCT/ weighting process on the sum information.

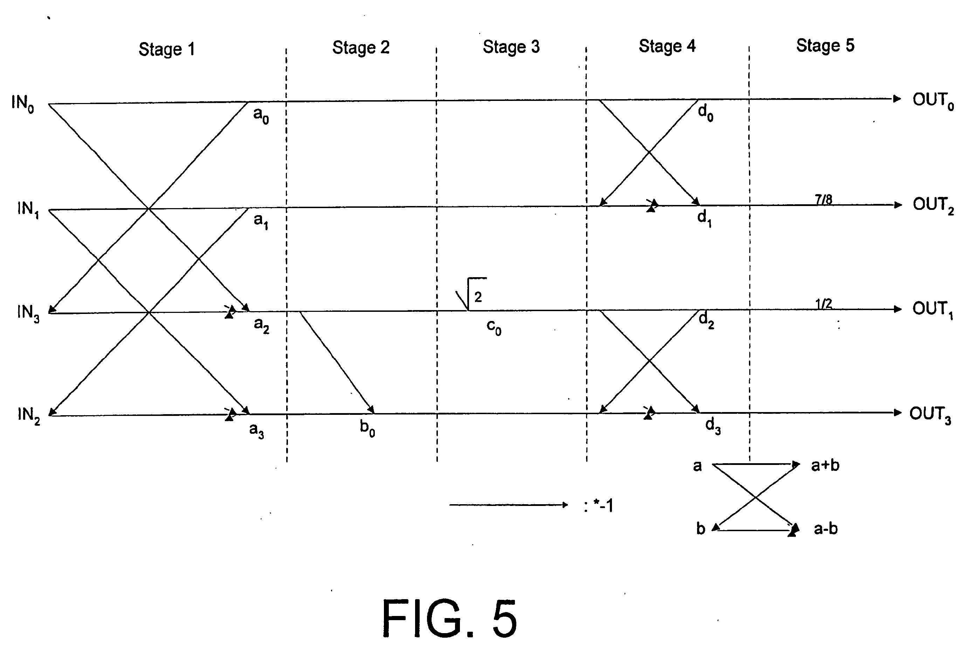

Fig. 5 is a diagram also known as a "butterfly diagram". Fig. 5 shows the 4-point 1-D combined DCT/weighting process of the present invention as a five-operation pipeline converting four inputs $IN_0$ - $IN_3$ to four outputs $OUT_0$ - $OUT_3$. In the diagram, input data flows from left to right. A diagonal line connecting two inputs indicates that the inputs are added together. An arrowhead indicates that the additive inverse of the result at the point of the arrow head is computed before the next calculation. A constant placed above a line segment indicates that the result at the left end of the line segment is multiplied by the indicated constant.

The transformation process begins with four inputs representing the vertical sum information of the pixel components of $P(x,y)$. In operation one, the four inputs $I_0$ - $I_3$ are combined pairwise, as shown in Fig. 5, to obtain first intermediate values $a_0$ - $a_3$. Combinations are performed using addition and subtraction (or addition by the additive inverse). In operation two, a subset of the first intermediate values are combined to obtain second intermediate value $b_0$. In the operation three, intermediate value $a_2$ is multiplied by a constant to obtain a third intermediate value $c_0$. In operation four, a subset of the previously determined first, second, and third intermediate values is pairwise combined to obtain fourth intermediate values, $d_0$ - $d_3$. In operation five, intermediate values $d_1$ and $d_2$ are multiplied by constants or shifted to obtain four output values, $O_0$-$O_3$. The output values are then used as input to the 8-point 1-D DCT/weighting transform on the horizontal components. The 8-point 1-D DCT/weighting transform is described more completely in the abovementioned patent.

Following execution of the 8-point DCT/weighting process, the input 4 x 8 matrix of sum information is a matrix of coefficients, each coefficient representing a weighting of that portion of the total image. Next, a 4-point DCT/weighting process followed by an 8-point DCT/weighting process is performed on the 4 x 8 matrix of difference information to obtain a second 4 x 8 matrix of coefficients.

The implementation of the 4-point 1-D DCT/weighting process shown in Fig. 5 only requires two multiplications and one shift operation. Furthermore, the calculations in the butterfly diagram of Fig. 5 can be scaled without changing the present invention. In particular, a scaling factor can be applied to any operation provided that it is consistently applied so as to preserve the mathematical relationship between the output data.

### D. Decompression

In decompression, the IDCT may be combined with an inverse weighting function in a manner that is basically an inverse of the compression process. First, the coefficient information is subjected to an inverse weighting process. If $Q(h,v)$ represents weighted coefficient information, then the inverse weighting process may be described mathematically as follows:

<span style="text-align:center">15</span>

$$Q'\ (h,\ v) = W'\ (h,\ v)\ Q\ (h,\ v)$$

where Q(h,v) represents the input to the inverse weighting function and Q'(h,v) is the output of the inverse weighting function.

The weights used in the inverse process of the DV format are the same as those used in the compression process described earlier, namely:

$$W'(h,v) = \begin{cases} 4 & h=0, v=0 \\ 2/(w(h)w(2v)), & v<4 \\ 2/(w(h)w(2(v-4))), & 4 \le v < 7 \end{cases}$$

where

w (0) = 1
w (1) = CS4/ (4 x CS7 x CS2)
w (2) = CS4/ (2 x CS6)
w (3) = 1/(2x CS5)
w (4) = 7/8
w (5) = CS4/CS3
w (6) = CS4/CS2
w (7) = CS4/CS1

and

CSm = COS (mΠ/16).

Additionally, the mathematical representation for the standard 2-4-8 IDCT equation for DV format is as follows:

If y = 2m, then for m = 0, 1, 2, 3, and x = 0, 1, ... , 7,

$$P(x,y) = P(x,2m) = \sum_{v=0}^{3} \sum_{h=0}^{7} \left( C(v)C(h)(Q'(h,v) + Q'(h,v+4)) \cos\left(\frac{\pi v(2m+1)}{8}\right) \cos\left(\frac{\pi h(2x+1)}{16}\right) \right)$$

Also, if y = 2m+1, for m = 0,1,2,3, and x = 0, 1, ... , 7,

$$P(x,y) = P(x,2m+1) = \sum_{v=0}^{3} \sum_{h=0}^{7} \left( C(v)C(h)(Q'(h,v) - Q'(h,v+4)) \cos\left(\frac{\pi v(2m+1)}{8}\right) \cos\left(\frac{\pi h(2x+1)}{16}\right) \right)$$

where $Q'\ (h,\ v)$ is the output of the inverse weighting function and is used as input to the IDCT. In the equation above, the output P(x,y) consists of pixel information representing the decoded image. Also, in the equation above,

$$C(h) = \begin{cases} \dfrac{1}{2\sqrt{2}}, & h = 0 \\ \dfrac{1}{2}, & h = 1 \ to \ 7 \end{cases}$$

and

$$C(v) = \begin{cases} \dfrac{1}{2\sqrt{2}}, & v = 0 \\ \dfrac{1}{2}, & v=1 \ to \ 7 \end{cases}$$

To combine the inverse weighting function and the IDCT, first substitute $W'(h, v) Q(h, v)$ for $Q'(h, v)$ in the IDCT equation. The result is a formula describing a combined inverse weighting/IDCT process.

$$P(x,y) = \sum_{v=0}^{3} \sum_{h=0}^{7} \left( C(v)C(h)\,(Q'(h,v)+(-1)^y\,Q'(h,v+4))\,COS\left(\frac{\pi v(2\cdot INT(y/2)+1)}{8}\right)COS\left(\frac{\pi h(2x+1)}{16}\right)\right)$$

$$P(x,y) = \sum_{v=0}^{3} \sum_{h=0}^{7} \left( C(v)C(h)\,(W(h,v)\,Q(h,v)+(-1)^y\,W'(h,v+4)\,Q(h,v+4))\,COS\left(\frac{\pi v(2\cdot INT(y/2)+1)}{8}\right)COS\left(\frac{\pi h(2x+1)}{16}\right)\right)$$

Next, define

$$Q''(h,v) = \begin{cases} 2\,Q(h,v) & h=0, v=0 \\ Q(h,v) & others \end{cases}$$

where $Q(h,v)$ is the input to the combined IW/IDCT process and $Q''(h,v)$ is an intermediate representation. After substituting for $Q(h,v)$, the result is:

$$P(x,y) = \sum_{v=0}^{3} \sum_{h=0}^{7} \left( C(v)C(h)\,\frac{2}{w(h)w(2v)}\,(Q''(h,v)+(-1)^y\cdot Q''(h,v+4))\,COS\left(\frac{\pi v(2\cdot INT(y/2)+1)}{8}\right)COS\left(\frac{\pi h(2x+1)}{16}\right)\right)$$

Next define

$$C'(h) = 2\sqrt{2}\,C(h) = \begin{cases} 1, & h=0 \\ \sqrt{2}, & h=1\ to\ 7 \end{cases}$$

and

$$C'(v) = \begin{cases} 1, & v=0 \\ \sqrt{2}, & v=1\ to\ 7 \end{cases}$$

After substituting again, the equation for the combined IDCT/IW process of the present invention is as follows, where Q"(h,v) is the intermediate representation and P(x,y) is the desired pixel information.

$$P(x,y) = \sum_{v=0}^{3} \sum_{h=0}^{7} \left( \frac{1}{4} \cdot \frac{C'(h)\,C'(v)}{w(h)\,w(2v)} \left(Q''(h,v) + (-1)^{y} \cdot Q''(h,v+4)\right) \cos\left(\frac{\pi v(2 \cdot INT(y/2)+1)}{8}\right) \cos\left(\frac{\pi h(2x+1)}{16}\right) \right)$$

If y = 2m, m = 0, 1,... 3, and x = 0, 1, ... 7, then

$$P(x,y) = P(x,2m) = \frac{1}{4} \sum_{v=0}^{3} \left\{ \frac{C'(v)}{w(2v)} \cos\left(\frac{\pi v(2m+1)}{8}\right) \left[ \underbrace{\sum_{h=0}^{7} \frac{C'(h)}{w(h)} \cos\left(\frac{\pi h(2x+1)}{16}\right) (Q''(h,v) + Q''(h,v+4))}_{\text{horizontal 8-point 1-D inverse weighting/IDCT}} \right] \right\}$$

$$\underbrace{\phantom{P(x,y) = P(x,2m) = \frac{1}{4} \sum_{v=0}^{3}}}_{\text{vertical 4-point 1-D inverse weighting/IDCT}}$$

if y = 2m + 1, m = 0, 1, ... 3, and x = 0, 1, ... 7, then

$$P(x,y) = P(x,2m) = \frac{1}{4} \sum_{h=0}^{7} \left\{ \frac{C'(h)}{w(h)} \cos\left(\frac{\pi h(2x+1)}{16}\right) \left[ \underbrace{\sum_{v=0}^{3} \frac{C'(v)}{w(2v)} \cos\left(\frac{\pi v(2m+1)}{8}\right) (Q''(h,v) + Q''(h,v+4))}_{\text{horizontal 8-point 1-D inverse weighting/IDCT}} \right] \right\}$$

$$\underbrace{\phantom{P(x,y) = P(x,2m) = \frac{1}{4} \sum_{h=0}^{7}}}_{\text{vertical 4-point 1-D inverse weighting/IDCT}}$$

The result is a formula for the combination of the inverse weighting function and the two-dimensional IDCT. As indicated above, the two-dimensional IW/IDCT can be separated into two 1-D transforms. In the equation above, an 8-point 1-D inverse weighting/IDCT process is performed first on the horizontal coordinates. The result is then used as input to the 4-point 1-D inverse weighting/IDCT process on the vertical coordinates.

Alternatively, Q"(h,v) may be factored as follows:

If y = 2m, m = 0, 1, ... 3, and x = 0, 1, ... 7,

$$P(x,y) = P(x,2m) = \frac{1}{4} \sum_{h=0}^{7} \left\{ \frac{C'(h)}{w(h)} \cos\left(\frac{\pi h(2x+1)}{16}\right) \left[ \underbrace{\sum_{v=0}^{3} \frac{C'(v)}{w(2v)} \cos\left(\frac{\pi v(2m+1)}{8}\right) (Q''(h,v) + Q''(h,v+4))}_{\text{horizontal 4-point 1-D inverse weighting/IDCT}} \right] \right\}$$

$$\underbrace{\phantom{P(x,y) = P(x,2m) = \frac{1}{4} \sum_{h=0}^{7}}}_{\text{horizontal 8-point 1-D inverse weighting/IDCT}}$$

If y = 2m + 1, m = 0, 1, ... 3, and x = 0, 1, ... 7,

$$P(x,y) = P(x,2m+1) = \frac{1}{4}\sum_{h=0}^{7}\left\{\frac{C'(h)}{w(h)}\cos\left(\frac{\pi h(2x+1)}{16}\right)\left[\sum_{v=0}^{3}\frac{C'(v)}{w(2v)}\cos\left(\frac{\pi v(2m+1)}{8}\right)(Q''(h,v) - Q''(h,v+4))\right]\right\}$$

$$\underbrace{\hphantom{\sum_{v=0}^{3}\frac{C'(v)}{w(2v)}\cos\left(\frac{\pi v(2m+1)}{8}\right)(Q''(h,v) - Q''(h,v+4))}}_{\text{vertical 4-point 1-D inverse weighting/IDCT}}$$

$$\underbrace{\hphantom{\sum_{h=0}^{7}\frac{C'(h)}{w(h)}\cos\left(\frac{\pi h(2x+1)}{16}\right)\sum_{v=0}^{3}\frac{C'(v)}{w(2v)}\cos\left(\frac{\pi v(2m+1)}{8}\right)}}_{\text{horizontal 8-point 1-D inverse weighting/IDCT}}$$

The equation above indicates that it is also mathematically equivalent to perform the 4-point 1-D inverse weighting/IDCT process on the vertical coordinates first and use the result as input to the 8-point 1-D transform on the horizontal coordinates. All 8-point 1-D combined inverse weighting/IDCT processes mentioned above are of the type described above in Section B. The 4-point 1-D inverse weighting/IDCT process is disclosed in the present invention below.

In 2-4-8 DCT mode, the combined inverse weighting/IDCT process is performed twice, once to obtain the 4 x 8 block of information of the even rows and once to obtain the 4 x 8 block of information of odd rows. Each combined inverse weighting/IDCT process involves performing a 4-point 1-D inverse weighting/IDCT process and an 8-point 1-D inverse weighting/IDCT process. The order in which the two transforms are performed on each block is immaterial. For sake of this explanation, the present invention will be described by performing the 4-point 1-D inverse weighting/IDCT process followed by the 8-point 1-D inverse weighting/IDCT process.

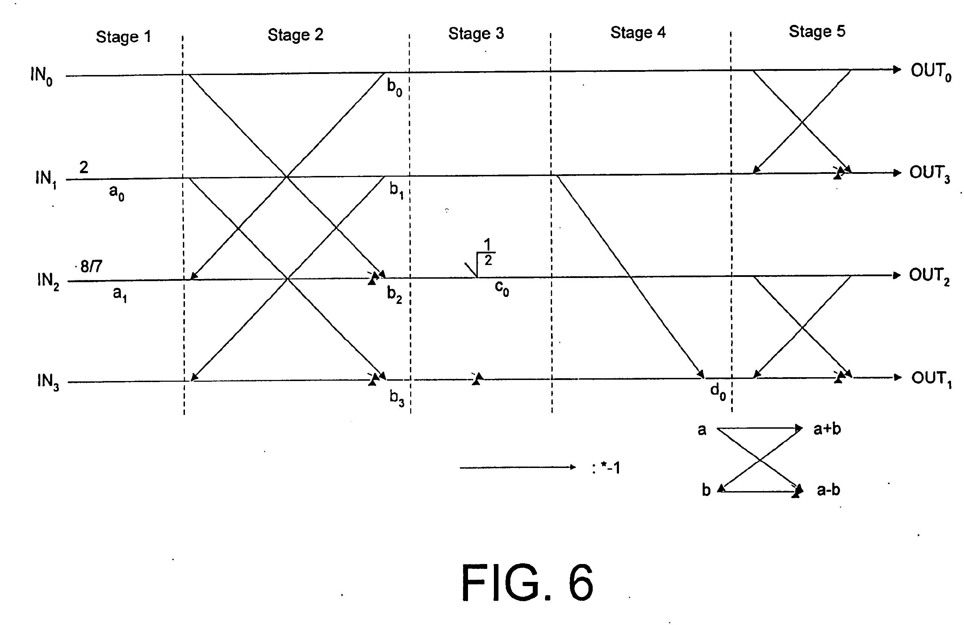

Fig. 6 illustrates a 4-point 1-D combined inverse weighting/IDCT process consistent with the present invention. The combined inverse weighting/IDCT process may be implemented as a five-operation pipeline as depicted by the butterfly diagram of Fig. 6.

The transformation process begins with four inputs $I_0$-$I_3$ representing the information of the even rows. These four inputs $I_0$-$I_3$ are obtained by adding the sum coefficients Q"(h,v) and the difference coefficients Q"(h, v+4). In operation one, the four inputs are either multiplied by constants or shifted to obtain first intermediate values, $a_0$ and $a_1$. In operation two, combinations are performed on a subset of the input components and the first intermediate values using addition and subtraction (or addition by the additive inverse) to obtain intermediate values, $b_0$-$b_3$. In operation three, intermediate value $b_2$ is multiplied by a constant to obtain a third intermediate value, $c_0$. In operation four, a pair of previously determined intermediate values are combined to obtain a fourth intermediate value, $d_0$. Operation five consists of multiple pairwise combinations of previously obtained intermediate values resulting in four output values $O_0$-$O_3$. The output values are then used as input to an 8-point 1-D inverse weighting/IDCT transform.

Following execution of the 8-point transform, the result is a 4 x 8 matrix of the even rows of pixel information. The process is repeated to obtain a second 4 x 8 matrix of the odd rows of the pixel information by using Q"(h, v) - Q"(h, v+4) as inputs. The combined inverse weighting/IDCT function as implemented in Fig. 4 requires only two multiplications and one shift operation. The.calculations in the butterfly diagram of Fig. 4 can be scaled without changing the present invention. The scaling factor can be applied to any operation so long as it is consistently applied so as to preserve the mathematical relationship between the output data.

### E. System

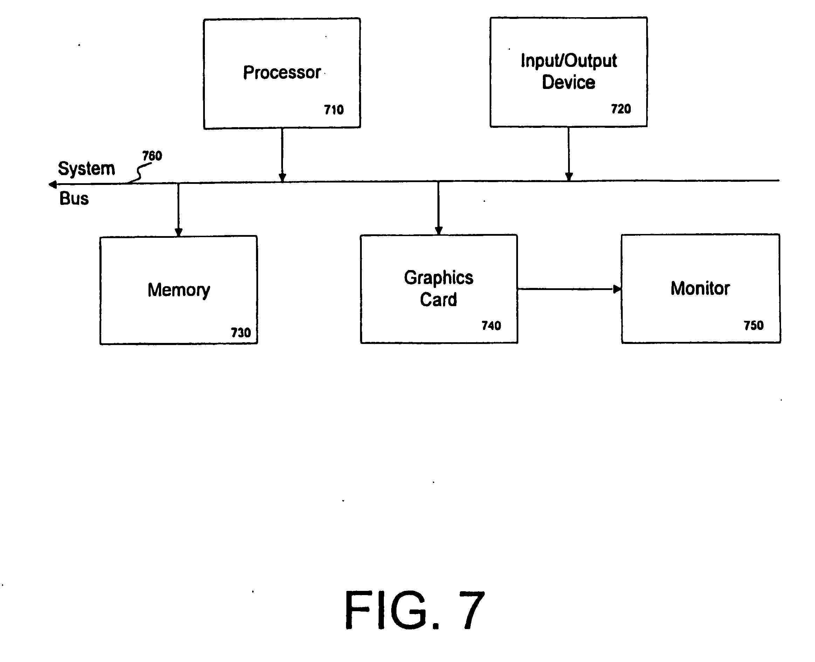

Fig. 7 illustrates a system consistent with the present invention. As shown in Fig. 7, a processor 710 is connected to at least one input/output (I/O) device 720 via any suitable data connection. I/O device 720 can be any device capable of passing information to or receiving data from processor 710. By way of example only, I/O device 720 may be a digital camcoder connected through IEEE 1394 interface. Processor 710 may be any commonly available processor such as, for example, a Pentium. Faster processors, however, will decrease execution time of the invention.

The system of the present invention also includes memory 730 and graphics card 740. Memory 730 stores the data being processed by processor 710 and the data being sent to or received from I/O device 720. Graphics card 740 converts the display image into a signal that can be received by display monitor 750. Processor 710, I/O device 720, memory 730, graphics card 740 and monitor 750 are connected via a standard system bus 760. Fig. 7 shows an exemplary network where each hardware component may be implemented by conventional, commercially available computer systems components.

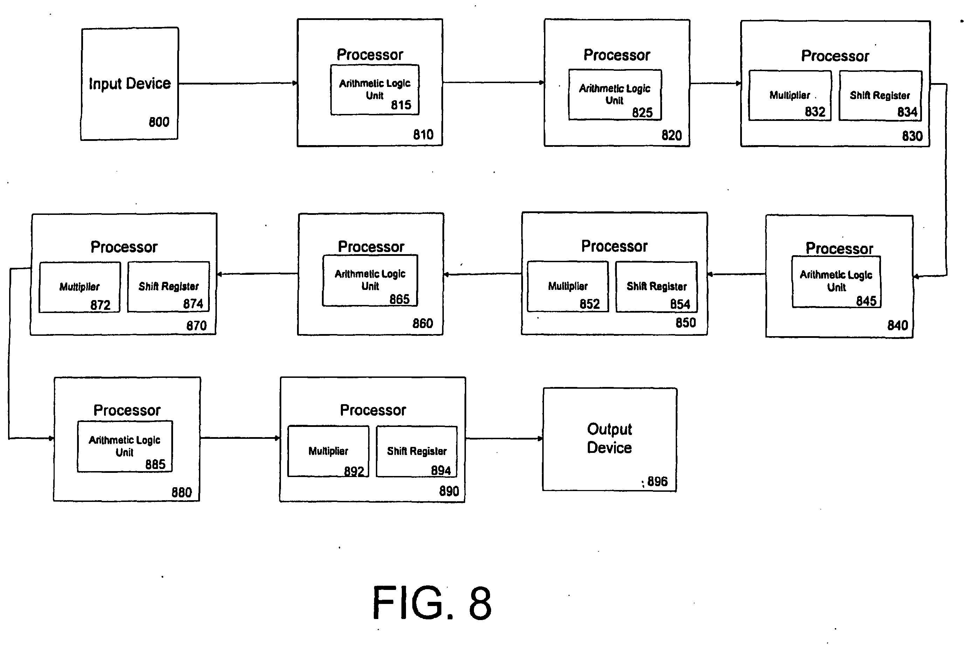

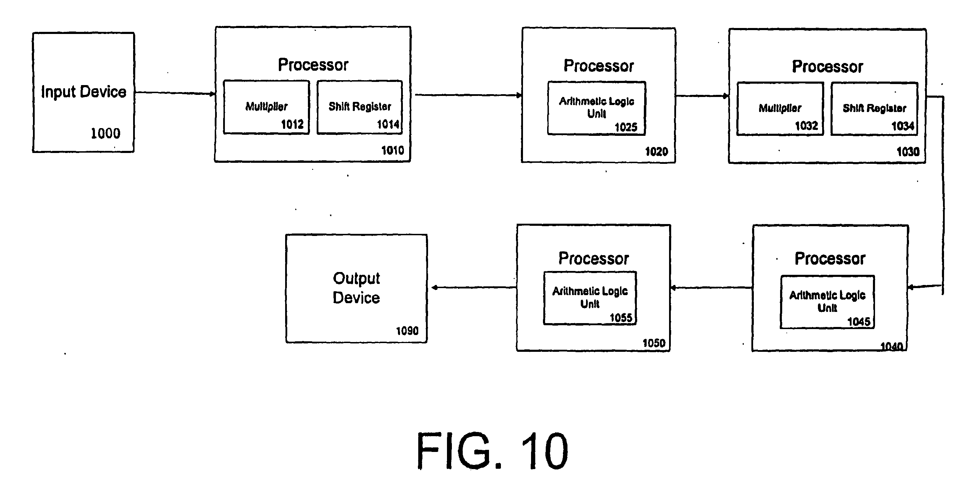

Moreover, a data compression system consistent with the present invention may be implemented as nine high-speed custom hardware processors as shown in Fig. 8 or as five high-speed custom hardware processors as shown in Fig. 10.

In Fig. 8, each processor 810-850 performs operations corresponding to one of the operations in Fig. 3. Processors 810, 820 and 840 contain at least one arithmetic logic unit (ALU). ALUs 815, 825, and 845 are processors capable of performing arithmetic and logical operations. Processors 830 and 850 each contain at least one multiplier 832 and 852 and at least one shift register 834 and 854. Each processor 810-890 performs operations corresponding to one of the operations in Fig. 3. The system of Fig. 8 also comprises an input device 800 and an output device 895.

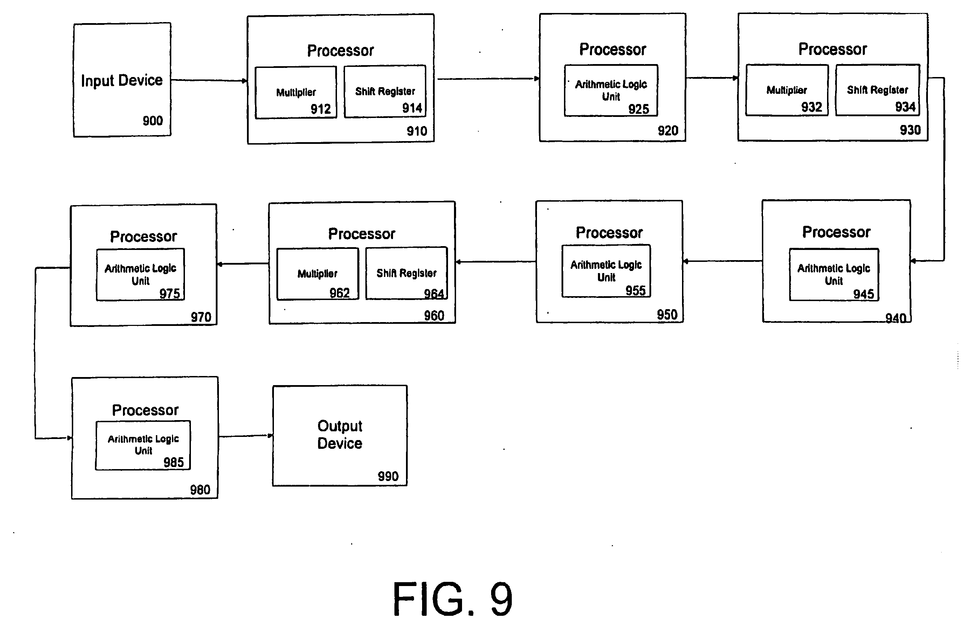

As shown in Fig. 9, a data decompression system consistent with the present invention may be implemented using an input device 900, output device, 995, and eight high-speed custom hardware processors 910, 920, ... 990. Processors 920, 940 and 950 contain at least one arithmetic logic unit (ALU). ALUs 925, 945, and 955 are processors capable of performing arithmetic and logical operations. Processors 910 and 930 each contain at least one multiplier 912 and 932 and at least one shift register 914 and 934. Each processor 910-990 performs operations corresponding to one of the operations in Fig. 4.

Fig. 10 shows five processors 1010-1050, each processor performing operations corresponding to one of the operations in Fig. 5. Processors 1010, 1020, and 1040 contain at least one arithmetic logic unit (ALU). ALUs 1015, 1025, and 1045 are processors capable of performing arithmetic and logical operations. Processors 1030 and 1050 each contain at least one multiplier 1032 and 1052 and at least one shift register 1034 and 1054. The system of Fig. 10 also comprises an input device 1000 and an output device 1090.

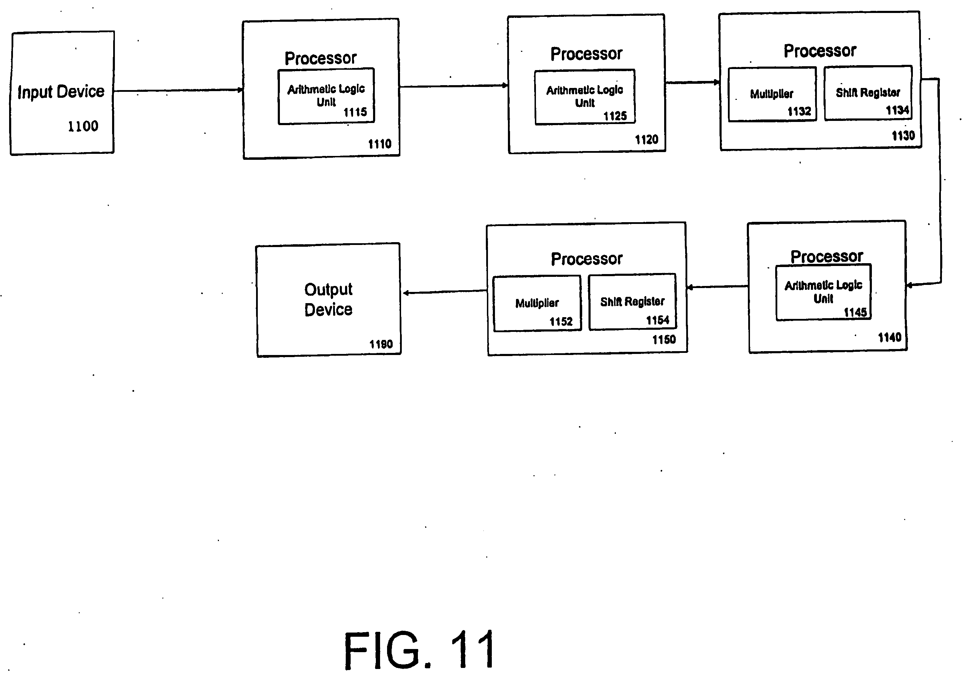

Furthermore, as shown in Fig. 11, a data decompression system consistent with the present invention may be implemented using an input device 1100, output device, 1190, and five high-speed custom hardware processors 1110, 1120, 1130, 1140, and 1150. Processors 1120, 1140, and 1150 contain at least one arithmetic logic unit (ALU). ALUs 1125, 1145, and 1155 are processors capable of performing arithmetic and logical operations. Processors 1110 and 1130 each contain at least one multiplier 1112 and 1132 and at least one shift register 1114 and 1134. Each processor 1110-1150 performs operations corresponding to one of the operations in Fig. 6.

Methods and apparatus consistent with the present invention may be implemented in software, hardware, or a combination of hardware and software. Software implementations of the invention are preferably embodied in a computer-readable media, such as a magnetic disk, or transferred over computer-readable media, such as the Internet.

It will be apparent to those skilled in the art that various modifications and variations can be made in the methods and systems consistent with the present invention. For example, if all of the constants in the invention described above were multiplied by the same constant, the result would be a scaled version of the present invention and would be functionally equivalent. The true scope of the claims is defined by the following claims.

**Claims**

1. A method for performing data compression in a digital video encoder, wherein the discrete cosine transform and weighting functions are combined, the method comprising the steps performed by a processor of:

   receiving a plurality of input components representing pixel information of an image;
   determining a first group of intermediate values by combining subsets of the input components;
   determining a second group of intermediate values by combining a first subset of the input components and the first group of intermediate values;
   determining a third group of intermediate values by combining a second subset of the input components and the first and second group of intermediate values with a first set of predetermined constants, each predetermined constant being a function of discrete cosine coefficients and digital video weighting constants;
   determining a fourth group of intermediate values by combining a third subset of the input components and the first, second, and third groups of intermediate values;
   determining a fifth group of intermediate values by combining a fourth subset of the input components and the first, second, third, and fourth groups of intermediate values with a second set predetermined constants, each predetermined constant being a function of discrete cosine coefficients and digital video weighting constants;
   determining a sixth group of intermediate values by combining a fifth subset of the input components and the first, second, third, fourth, and fifth groups of intermediate values;
   determining a seventh group of intermediate values by combining a sixth subset of the input components and the first, second, third, fourth, fifth, and sixth groups of intermediate values with a third set of predetermined constants, each predetermined constant being a function of discrete cosine coefficients and digital video weighting constants;
   determining an eighth group of intermediate values by combining a seventh subset of the input components and the first, second, third, fourth, fifth, sixth, and seventh groups of intermediate values;
   determining output components by combining an eighth subset of the input components and the first, second, third, fourth, fifth, sixth, seventh, and eighth groups of intermediate values with a fourth set of predetermined constants, each predetermined constant being a function of discrete cosine coefficients and digital video weighting constants; and,

supplying the output components to an output terminal as weighted, compressed digital representations of an image.

2. A method for performing data compression in a digital video encoder according to claim 1, the method comprising the operations of:

receiving eight input values, $IN_0$-$IN_7$, representing pixel information of an image;
determining a first intermediate value $a_0$ equal to $IN_0$+$IN_7$;
determining a first intermediate value $a_1$ equal to $IN_1$+$IN_6$;
determining a first intermediate value $a_2$ equal to $IN_2$+$IN_5$;
determining a first intermediate value $a_3$ equal to $IN_3$+$IN_4$;
determining a first intermediate value $a_4$ equal to $IN_0$-$IN_7$;
determining a first intermediate value $a_5$ equal to $IN_1$ - $IN_6$;
determining a first intermediate value $a_6$ equal to $IN_2$ - $IN_5$;
determining a first intermediate value $a_7$ equal to $IN_3$-$IN_4$;
determining a second intermediate value $b_0$ equal to $a_0$+$a_3$;
determining a second intermediate value $b_1$ equal to $a_1$+$a_2$;
determining a second intermediate value $b_2$ equal to $a_0$-$a_3$;
determining a second intermediate value $b_3$ equal to $a_1$-$a_2$;
determining a second intermediate value $b_4$ equal to $a_5$+$a_6$;
determining a second intermediate value $b_5$ equal to $a_4 + a_7$;
multiplying $a_4$ by the constant $2Cos(\pi/4)$ to obtain a third intermediate value $c_0$:
multiplying as by the constant $2Cos(tr/4)$ to obtain a third intermediate value $c_1$:
determining a fourth intermediate value $d_0$ equal to $b_2$+$b_3$;
determining a fourth intermediate value $d_1$ equal to $c_0$+$b_4$;
determining a fourth intermediate value $d_2$ equal to $c_1$+$b_5$;
determining a fourth intermediate value $d_3$ equal to $c_0$-$b_4$;
determining a fourth intermediate value $d_4$ equal to $c_1$-$b_5$;
multiplying $b_2$ by the constant $2Cos(\pi/4)$ to obtain a fifth intermediate value $e_0$;
determining a sixth intermediate value $f_0$ equal to $b_0 + b_1$;
determining a sixth intermediate value $f_1$ equal to $b_0 - b_1$;
determining a sixth intermediate value $f_2$ equal to $e_0 + d_0$;
determining a sixth intermediate value $f_3$ equal to $e_0 - d_0$;
determining a sixth intermediate value $f_4$ equal to $d_1 + d_2$;
determining a sixth intermediate value $f_5$ equal to $d_3 + d_4$;
multiplying $d_1$ by the constant $2Cos(\pi/8)$ to obtain a seventh intermediate value $g_0$;
multiplying $d_3$ by the constant $2Cos(3\pi/8)$ to obtain a seventh intermediate value $g_1$;
determining a eighth intermediate value $h_0$ equal to $g_0 + f_4$;
determining a eighth intermediate value $h_1$ equal to $g_0 - f_4$;
determining a eighth intermediate value $h_2$ equal to $g_1 + f_5$;
determining a eighth intermediate value $h_3$ equal to $g_1 - f_5$;
multiplying $f_1$ by the constant 7/8 to obtain an output $OUT_4$;
shifting $f_2$ to obtain an output $OUT_2$;
multiplying $h_0$ by the constant $1/4Cos(\pi/8)$ to obtain an output $OUT_1$;
multiplying $h_2$ by the constant $1/2Cos(\pi/4)$ to obtain an output $OUT_3$; and,
outputting outputs $OUT_1$-$OUT_4$, $f_0$, $f_3$, $h_1$, and $h_3$, representing weighted, compressed digital representations of an image.

3. A data compression system for performing data compression in a digital video encoder, wherein the discrete cosine transform and weighting functions are combined, the system comprising:

an input device (800) for receiving a plurality of input components representing pixel information of an image;
a first processor (810) for determining a first group of intermediate values by combining subsets of the input components;
a second processor (820) for determining a second group of intermediate values by combining a first subset of the input components and the first group of intermediate values;

a third processor (830) for determining a third group of intermediate values by combining a second subset of the input components and the first and second groups of intermediate values with a first set of predetermined constants, each predetermined constant being a function of discrete cosine coefficients and digital video weighting constants;

a fourth processor (840) for determining a fourth group of intermediate values by combining a third subset of the input components and the first, second, and third groups of intermediate values;

a fifth processor (850) for determining a fifth group of intermediate values by combining a fourth subset of the input components and the first, second, third, and fourth groups of intermediate values with a second set of predetermined constants, each predetermined constant being a function of discrete cosine coefficients and digital video weighting constants;

a sixth processor (860) for determining a sixth group of intermediate values by combining a fifth subset of the input components and the first, second, third, fourth, and fifth groups of intermediate values;

a seventh processor (870) for determining a seventh group of intermediate values by combining a sixth subset of the input components and the first, second, third, fourth, fifth, and sixth groups of intermediate values with a third set of predetermined constants, each predetermined constant being a function of discrete cosine coefficients and digital video weighting constants;

an eighth processor (880) for determining an eighth group of intermediate values by combining an seventh subset of the input components and the first, second, third, fourth, fifth, sixth, and seventh groups of intermediate values;

a ninth processor (890) for determining output components by combining an eighth subset of the input components and the first, second, third, fourth, fifth, sixth, seventh and eighth groups of intermediate values with a fourth set of predetermined constants, each predetermined constant being a function of discrete cosine coefficients and digital video weighting constants; and,

an output device for supplying the output components to an output terminal as weighted, compressed digital representations of an image.

4. A data compression system according to claim 3 comprising:

an input device (720) for receiving eight input values, $IN_0$-$IN_7$ representing pixel information of an image;

a processor (710) for performing the following determinations:

determining a first intermediate value $a_0$ equal to $IN_0+IN_7$;
determining a first intermediate value $a_1$ equal to $IN_1+IN_6$;
determining a first intermediate value $a_2$ equal to $IN_2+IN_5$;
determining a first intermediate value $a_3$ equal to $IN_3+IN_4$;
determining a first intermediate value $a_4$ equal to $IN_0-IN_7$;
determining a first intermediate value $a_5$ equal to $IN_1-IN_6$;
determining a first intermediate value $a_6$ equal to $IN_2-IN_5$;
determining a first intermediate value $a_7$ equal to $IN_3-IN_4$;
determining a second intermediate value $b_0$ equal to $a_0+a_3$;
determining a second intermediate value $b_1$ equal to $a_1+a_2$;
determining a second intermediate value $b_2$ equal to $a_0-a_3$;
determining a second intermediate value $b_3$ equal to $a_1-a_2$;
determining a second intermediate value $b_4$ equal to $a_5+a_6$;
determining a second intermediate value $b_5$ equal to $a_4+a_7$;
multiplying $a_4$ by the constant $2Cos(\pi/4)$ to obtain a third intermediate value $c_0$:
multiplying $a_5$ by the constant $2Cos(\pi/4)$ to obtain a third intermediate value $c_1$:
determining a fourth intermediate value $d_0$ equal to $b_2+b_3$;
determining a fourth intermediate value $d_1$ equal to $c_0+b_4$;
determining a fourth intermediate value $d_2$ equal to $c_1+b_5$;
determining a fourth intermediate value $d_3$ equal to $c_0-b_4$;
determining a fourth intermediate value $d_4$ equal to $c_1-b_5$;
multiplying $b_2$ by the constant $2Cos(\pi/4)$ to obtain a fifth intermediate value $e_0$;
determining a sixth intermediate value $f_0$ equal to $b_0 + b_1$;
determining a sixth intermediate value $f_1$ equal to $b_0 - b_1$;
determining a sixth intermediate value $f_2$ equal to $e_0 + d_0$;
determining a sixth intermediate value $f_3$ equal to $e_0 - d_0$;

determining a sixth intermediate value $f_4$ equal to $d_1 + d_2$;
determining a sixth intermediate value $f_5$ equal to $d_3 + d_4$;
multiplying $d_1$ by the constant $2Cos(\pi/8)$ to obtain a seventh intermediate value $g_0$;
multiplying $d_3$ by the constant $2Cos(3\pi/8)$ to obtain a seventh intermediate value $g_1$;
determining a eighth intermediate value $h_0$ equal to $g_0 + f_4$;
determining a eighth intermediate value $h_1$ equal to $g_0 - f_4$;
determining a eighth intermediate value $h_2$ equal to $g_1 + f_5$;
determining a eighth intermediate value $h_3$ equal to $g_1 - f_5$;
multiplying $f_1$ by the constant $7/8$ to obtain an output $OUT_4$;
shifting $f_2$ to obtain an output $OUT_2$;
multiplying $h_0$ by the constant $1/4Cos(\pi/8)$ to obtain an output $OUT_1$;
multiplying $h_2$ by the constant $1/2Cos(\pi/4)$ to obtain an output $OUT_3$; and,

an output device (720) for outputting outputs $OUT_1$-$OUT_4$, $f_0$, $f_3$, $h_1$, and $h_3$, representing weighted, compressed digital representations of an image.

5. A method for performing data decompression in a digital video decoder, wherein the inverse discrete cosine transform and weighting functions are combined, the method comprising the steps performed by a processor of:

receiving a plurality of input components representing weighted, compressed digital representations of an image;
determining a first group of intermediate values by combining selected input components with a first set of predetermined constants, each predetermined constant being a function of discrete cosine coefficients and digital video weighting constants;
determining a second group of intermediate values by combining a first subset of the input components and the first group of intermediate values;
determining a third group of intermediate values by combining a second subset of the input components and the first and second groups of intermediate values with a second set of predetermined constants, each predetermined constant being a function of discrete cosine coefficients and digital video weighting constants;
determining a fourth group of intermediate values by combining a third subset of the input components and the first, second, and third groups of intermediate values;
determining a fifth group of intermediate values by combining a fourth subset of the input components and the first, second, third, and fourth groups of intermediate values;
determining a sixth group of intermediate values by combining a fifth subset of the input components and the first, second, third, fourth, and fifth groups of intermediate values with a third set of predetermined constants, each predetermined constant being a function of discrete cosine coefficients and digital video weighting constants;
determining a seventh group of intermediate values by combining a sixth subset of the input components and the first, second, third, fourth, fifth, and sixth groups of intermediate values;
determining output components by combining a seventh subset of the input components and the first, second, third, fourth, fifth, sixth, and seventh groups of intermediate values; and,
supplying output components decompressed pixel information of an image.

6. A method for performing data decompression according to claim 5, the method comprising the operations of:

receiving eight input values $IN_0$-$IN_7$ representing digital representations of an image;
determining a first intermediate value $a_0$ by multiplying $IN_4$ by the constant $8/7$;
determining a first intermediate value $a_1$ by shifting $IN_2$;
determining a first intermediate value $a_2$ by multiplying $IN_1$ by the constant $4Cos(\pi/8)$;
determining a first intermediate value $a_3$ by multiplying $IN_3$ by the constant $2Cos(\pi/4)$;
determining a second intermediate value $b_0$ equal to $IN_0 + a_0$;
determining a second intermediate value $b_1$ equal to $IN_0 - a_0$;
determining a second intermediate value $b_2$ equal to $a_1 + IN_6$;
determining a second intermediate value $b_3$ equal to $a_1 - IN_6$;
determining a second intermediate value $b_4$ equal to $a_2 + IN_7$;
determining a second intermediate value $b_5$ equal to $a_2 - IN_7$;
determining a second intermediate value $b_6$ equal to $a_3 + IN_5$;
determining a second intermediate value $b_7$ equal to $a_3 - IN_5$;
determining a third intermediate value $c_0$ by multiplying $b_2$ by the constant $Cos(\pi/4)$;

23

determining a third intermediate value $c_1$ by multiplying $b_4$ by the constant $2Cos(3\pi/8)Cos(\pi/4)$;
determining a third intermediate value $c_2$ by multiplying $b_6$ by the constant $2Cos(\pi/8)Cos(\pi/4)$;
determining a fourth intermediate value $d_0$ equal to $b_3 - c_0$;
determining a fourth intermediate value $d_1$ equal to $b_5 - c_1$;
determining a fourth intermediate value $d_2$ equal to $b_7 - c_2$;
determining a fifth intermediate value $e_0$ equal to $b_0 + c_0$;
determining a fifth intermediate value $e_1$ equal to $b_1 + d_0$;
determining a fifth intermediate value $e_2$ equal to $b_0 - c_0$;
determining a fifth intermediate value $e_3$ equal to $b_1 - d_0$;
determining a fifth intermediate value $e_4$ equal to $c_1 + c_2$;
determining a fifth intermediate value $e_5$ equal to $d_1 + d_2$;
determining a fifth intermediate value $e_6$ equal to $c_1 - c_2$;
determining a fifth intermediate value $e_7$ equal to $d_1 - d_2$;
determining a sixth intermediate value $f_0$ by multiplying $e_4$ by the constant $Cos(\pi/4)$;
determining a sixth intermediate value $f_1$ by multiplying $e_5$ by the constant $Cos(\pi/4)$;
determining a seventh intermediate value $g_0$ equal to $e_6 - f_1$;
determining a seventh intermediate value $g_1$ equal to $e_7 - f_0$;
determining an output $OUT_0$ equal to $e_0 + f_0$;
determining an output $OUT_1$ equal to $e_1 + f_1$;
determining an output $OUT_2$ equal to $e_3 + g_0$;
determining an output $OUT_3$ equal to $e_2 + g_1$;
determining an output $OUT_4$ equal to $e_2 - g_1$;
determining an output $OUT_5$ equal to $e_3 - g_0$;
determining an output $OUT_6$ equal to $e_1 - f_1$;
determining an output $OUT_7$ equal to $e_0 - f_0$; and,
outputting outputs $OUT_0$ through $OUT_7$ representing pixel information of an image.

7. A data decompression system for performing data decompression in a digital video decoder, wherein the inverse discrete cosine transform and weighting functions are combined, the system comprising:

an input device (900) for receiving a plurality of input components representing weighted, compressed digital representations of an image;
a first processor (910) for determining a first group of intermediate values by combining selected input components with a first set of predetermined constants, each predetermined constant being a function of discrete cosine coefficients and digital video weighting constants;
a second processor (920) for determining a second group of intermediate values by combining a first subset of the input components and the first group of intermediate values;
a third processor (930) for determining a third group of intermediate values by combining a second subset of the input components and the first and second groups of intermediate values with a second set of predetermined constants, each predetermined constant being a function of discrete cosine coefficients and digital video weighting constants;
a fourth processor (940) for determining a fourth group of intermediate values by combining a third subset of the input components and the first, second, and third groups of intermediate values;
a fifth processor (950) for determining a fifth group of intermediate values by combining a fourth subset of the input components and the first, second, third, and fourth groups of intermediate values;
a sixth processor (960) for determining a sixth group of intermediate values by combining a fifth subset of the input components and the first, second, third, fourth, and fifth groups of intermediate values with a third set of predetermined constants, each predetermined constant being a function of discrete cosine coefficients and digital video weighting constants;
a seventh processor (970) for determining a seventh group of intermediate values by combining a sixth subset of the input components and the first, second, third, fourth, fifth, and sixth groups of intermediate values;
an eighth processor (980) for determining output components by combining a seventh subset of the input components and the first, second, third, fourth, fifth, sixth, and seventh groups of intermediate values; and,
an output device (990) for supplying the output components decompressed pixel information of an image..

8. A data decompression system according to claim 7, the system comprising:

an input device (720) for receiving eight input values, $IN_0$-$IN_7$ representing digital representations of an image;

**EP 0 917 070 B1**

a processor for (710) performing the following determinations:

determining a first intermediate value $a_0$ by multiplying $IN_4$ by the constant 8/7;
determining a first intermediate value $a_1$ by shifting $IN_2$;
determining a first intermediate value $a_2$ by multiplying $IN_1$ by the constant $4\text{Cos}(\pi/8)$;
determining a first intermediate value $a_3$ by multiplying $IN_3$ by the constant $2\text{Cos}(\pi/4)$;
determining a second intermediate value $b_0$ equal to $IN_0+a_0$;
determining a second intermediate value $b_1$ equal to $IN_0-a_0$;
determining a second intermediate value $b_2$ equal to $a_1+ IN_6$;
determining a second intermediate value $b_3$ equal to $a_1- IN_6$;
determining a second intermediate value $b_4$ equal to $a_2+ IN_7$;
determining a second intermediate value $b_5$ equal to $a_2- IN_7$;
determining a second intermediate value $b_6$ equal to $a_3 + IN_5$;
determining a second intermediate value $b_7$ equal to $a_3- IN_5$;
determining a third intermediate value $c_0$ by multiplying $b_2$ by the constant $\text{Cos}(\pi/4)$;
determining a third intermediate value $c_1$ by multiplying $b_4$ by the constant $2\text{Cos}(3\pi/8)\text{Cos}(\pi/4)$;
determining a third intermediate value $c_2$ by multiplying $b_6$ by the constant $2\text{Cos}(\pi/8)\text{Cos}(\pi/4)$;
determining a fourth intermediate value $d_0$ equal to $b_3- c_0$;
determining a fourth intermediate value $d_1$ equal to $b_5 - c_1$;
determining a fourth intermediate value $d_2$ equal to $b_7 - c_2$;
determining a fifth intermediate value $e_0$ equal to $b_0 + c_0$;
determining a fifth intermediate value $e_1$ equal to $b_1 + d_0$;
determining a fifth intermediate value $e_2$ equal to $b_0 - c_0$;
determining a fifth intermediate value $e_3$ equal to $b_1 - d_0$;
determining a fifth intermediate value $e_4$ equal to $c_1 + c_2$;
determining a fifth intermediate value $e_5$ equal to $d_1 + d_2$;
determining a fifth intermediate value $e_6$ equal to $c_1 - c_2$;
determining a fifth intermediate value $e_7$ equal to $d_1 - d_2$;
determining a sixth intermediate value $f_0$ by multiplying $e_4$ by the constant $\text{Cos}(\pi/4)$;
determining a sixth intermediate value $f_1$ by multiplying $e_5$ by the constant $\text{Cos}(\pi/4)$;
determining a seventh intermediate value $g_0$ equal to $e_6 - f_1$;
determining a seventh intermediate value $g_1$ equal to $e_7 - f_0$;
determining an output $OUT_0$ equal to $e_0 + f_0$;
determining an output $OUT_1$ equal to $e_1 + f_1$;
determining an output $OUT_2$ equal to $e_3 + g_0$;
determining an output $OUT_3$ equal to $e_2 + g_1$;
determining an output $OUT_4$ equal to $e_2 - g_1$:
determining an output $OUT_5$ equal to $e_3 - g_0$;
determining an output $OUT_6$ equal to $e_1 - f_1$;
determining an output $OUT_7$ equal to $e_0 - f_0$; and,

an output device (710) for outputting the outputs, $OUT_0$-$OUT_7$, representing pixel information of an image.

9. A method for performing data compression in a digital video encoder, wherein the discrete cosine transform and weighting functions are combined, the method comprising the steps performed by a processor of:

receiving a plurality of input components representing pixel components of an image;
determining a first group of intermediate values by combining subsets of the input components;
determining a second group of intermediate values by combining a first subset of the input components and the first group of intermediate values;
determining a third group of intermediate values by combining a second subset of the input components and the first and second groups of intermediate values with predetermined constants, each predetermined constant being a function of discrete cosine coefficients and digital video weighting constants;
determining a fourth group of intermediate values by combining a third subset of the input components and the first, second, and third groups of intermediate values;
determining output components by combining a fourth subset of the input components and the first, second, third, and fourth groups of intermediate values with a second set of predetermined constants, each predetermined constant being a function of discrete cosine coefficients and digital video weighting constants; and,

outputting output components representing weighted, compressed digital representations of an image.

10. A method for performing data compression according to claim 9, the method comprising the steps performed by a processor of:

receiving four input values $IN_0$-$IN_3$ representing digital representations of an image;
determining a first intermediate value $a_0$ equal to $IN_0+IN_3$;
determining a first intermediate value $a_1$ equal to $IN_1+IN_2$;
determining a first intermediate value $a_2$ equal to $IN_0- IN_3$;
determining a first intermediate value $a_3$ equal to $IN_1-IN_2$;
determining a second intermediate value $b_0$ equal to $a_2+a_3$;
determining a third intermediate value $c_0$ by multiplying $a_2$ by the constant 2;
determining a fourth intermediate value $d_0$ equal to $a_0 + a_1$;
determining a fourth intermediate value $d_1$ equal to $a_0 - a_1$;
determining a fourth intermediate value $d_2$ equal to $c_0 + b_0$;
determining a fourth intermediate value $d_3$ equal to $c_0 - b_0$;
determining an output $OUT_0$ equal to $d_0$;
determining an output $OUT_1$ by shifting $d_2$ ;
determining an output $OUT_2$ by multiplying $d_1$ by the constant 7/8;
determining an output $OUT_3$ equal to $d_3$; and,
outputting outputs $OUT_0$-$OUT_3$ representing weighted, compressed digital representations of an image.

11. A data compression system for performing data compression in a digital video encoder, wherein the discrete cosine transform and weighting functions are combined, the system comprising:

an input device (1000) for receiving a plurality of input components representing pixel information of an image;
a first processor (1010) for determining a first group of intermediate values by combining subsets of the input components;
a second processor (1020) for determining a second group of intermediate values by combining a first subset of the input components and the first group of intermediate values;
a third processor (1030) for determining a third group of intermediate values by combining a second subset of the input components and the first and second sets of intermediate values with predetermined constants, each predetermined constant being a function of discrete cosine coefficients and digital video weighting constants;
a fourth processor (1040) for determining a fourth group of intermediate values by combining a third subset of the input components and the first, second, and third groups of intermediate values;
a fifth processor (1050) for determining output components by combining a fourth subset of the input components and the first, second, third, and fourth groups of intermediate values with predetermined constants, each predetermined constant being a function of discrete cosine coefficients and digital video weighting constants; and,
an output device (1090) for outputting the output components as weighted, compressed digital representations of an image.

12. A data compression system according claim 11, the system comprising:

an input device (720) for receiving four input values, $IN_0$-$IN_3$ representing pixel components of an image;
a processor for (710) performing the following determinations:

receiving four input values $IN_0$-$IN_3$ representing digital representations of an image;
determining a first intermediate value $a_0$ equal to $IN_0+IN_3$;
determining a first intermediate value $a_1$ equal to $IN_1+IN_2$;
determining a first intermediate value $a_2$ equal to $IN_0- IN_3$;
determining a first intermediate value $a_3$ equal to $IN_1-IN_2$;
determining a second intermediate value $b_0$ equal to $a_2+a_3$;
determining a third intermediate value $c_0$ by multiplying $a_2$ by the constant 2;
determining a fourth intermediate value $d_0$ equal to $a_0 + a_1$;
determining a fourth intermediate value $d_1$ equal to $a_0 - a_1$;
determining a fourth intermediate value $d_2$ equal to $c_0 + b_0$;
determining a fourth intermediate value $d_3$ equal to $c_0 - b_0$;
determining an output $OUT_0$ equal to $d_0$;

determining an output $OUT_1$ by shifting $d_2$ ;
determining an output $OUT_2$ by multiplying $d_1$ by the constant 7/8; and,
determining an output $OUT_3$ equal.to $d_3$; and,

an output device (720) for outputting $OUT_0$-$OUT_3$ representing weighted, compressed digital representations of an image.

13. A method for performing data decompression in a digital video decoder, wherein the inverse discrete cosine transform and weighting functions are combined, the method comprising the steps performed by a processor of:

receiving a plurality of input components representing weighted, compressed digital representations of an image;
determining a first group of intermediate values by combining a subset of the input components with a first set of predetermined constants, each predetermined constant being a function of discrete cosine coefficients and digital video weighting constants;
determining a second group of intermediate values by combining a first subset of the input components and the first group of intermediate values;
determining a third group of intermediate values by combining a second subset of the input components and the first and second groups of intermediate values with predetermined constants, each predetermined constant being a function of discrete cosine coefficients and digital video weighting constants;
determining a fourth group of intermediate values by combining a third subset of the input components and the first, second, and third groups of intermediate values;
determining output components by combining a fourth subset of the input components and the first, second, third, and fourth groups of intermediate values; and,
outputting output components representing pixel information of an image.

14. A method for performing data decompression according to claim 13, the method comprising the steps performed by a processor of:

receiving four input values $IN_0$-$IN_3$ representing weighted, compressed digital representations of an image;
determining a first intermediate value $a_0$ by shifting $IN_1$;
determining a first intermediate value $a_1$ by multiplying $a_0$ by the constant 8/7;
determining a second intermediate value $b_0$ equal to $IN_0 + a_1$;
determining a second intermediate value $b_1$ equal to $a_0 + IN_3$;
determining a second intermediate value $b_2$ equal to $IN_0 - a_1$;
determining a second intermediate value $b_3$ equal to $a_0 - IN_3$;
determining a third intermediate value $c_0$ by multiplying $b_2$ by the constant 1/ 2;
determining a fourth intermediate value $d_0$ equal to $b_1 - b_3$;
determining an output $OUT_0$ equal to $b_0 + b_1$;
determining an output $OUT_1$ equal to $b_0 - b_1$;
determining an output $OUT_2$ equal to $c_0 + d_0$;
determining an output $OUT_3$ equal to $c_0 - d_0$;

combining outputs $OUT_0$ through $OUT_3$ to form decompressed pixel information of an image.

15. A data decompression system for performing data decompression in a digital video decoder, wherein the inverse discrete cosine transform and weighting functions are combined, the system comprising:

an input device (1100) for receiving a plurality of input components representing weighted, compressed digital representations of an image;
a first processor (1110) for determining a first group of intermediate values by combining a subset of the input components with a first set of predetermined constants, each predetermined constant being a function of discrete cosine coefficients and digital video weighting constants;
a second processor (1120) for determining a second group of intermediate values by combining a first subset of the input components and the first group of intermediate values;
a third processor (1130) for determining a third group of intermediate values by combining a second subset of the input components and the first and second groups of intermediate values with the second set of predetermined constants, each predetermined constant being a function of discrete cosine coefficients and digital video weighting constants;

a fourth processor (1140) for determining a fourth group of intermediate values by combining a third subset of the input components and the first, second, and third groups of intermediate values;

a fifth processor for (1150) determining output components by combining a fourth subset of the input components and the first, second, third, and fourth groups of intermediate values; and,

an output device (1190) for outputting the output components representing decompressed pixel components of an image.

**16.** A data decompression system according to claim 15, the system comprising:

an input device (720) for receiving four input values, $IN_0$-$IN_3$ representing weighted, compressed digital representations of an image;

a processor (710) for performing the following determinations:

determining a first intermediate value $a_0$ by shifting $IN_1$;

determining a first intermediate value $a_1$ by multiplying $a_0$ by the constant 8/7;

determining a second intermediate value $b_0$ equal to $IN_0+a_1$;

determining a second intermediate value $b_1$ equal to $a_0+IN_3$;

determining a second intermediate value $b_2$ equal to $IN_0-a_1$;

determining a second intermediate value $b_3$ equal to $a_0-IN_3$;

determining a third intermediate value $c_0$ by multiplying $b_2$ by the constant 1/2;

determining a fourth intermediate value $d_0$ equal to $b_1 - b_3$;

determining an output $OUT_0$ equal to $b_0 + b_1$;

determining an output $OUT_1$ equal to $b_0 - b_1$;

determining an output $OUT_2$ equal to $c_0 + d_0$;

determining an output $OUT_3$ equal to $c_0 - d_0$; and

an output device (710) for providing the outputs, $OUT_0$-$OUT_7$, representing the decompressed pixel components of an image.

**Patentansprüche**

**1.** Verfahren zum Durchführen einer Datenkompression in einem digitalen Video-Codierer, wobei die diskrete Kosinus-Transformation und Gewichtungsfunktionen kombiniert werden, umfassend die durch einen Prozessor ausgeführten Schritte:

Empfangen einer Mehrzahl von Eingangskomponenten, welche Pixelinformationen eines Bildes darstellen;

Bestimmen einer ersten Gruppe von Zwischenwerten durch Kombinieren von Teilsätzen der Eingangskomponenten;

Bestimmen einer zweiten Gruppe von Zwischenwerten durch Kombinieren eines ersten Teilsatzes der Eingangskomponenten und der ersten Gruppe von Zwischenwerten;

Bestimmen einer dritten Gruppe von Zwischenwerten durch Kombinieren eines zweiten Teilsatzes der Eingangskomponenten und der ersten und zweiten Gruppen von Zwischenwerten mit einem ersten Satz von bestimmten Konstanten, deren jede eine Funktion von diskreten Kosinus-Koeffizienten und digitalen Video-Gewichtungskonstanten ist;

Bestimmen einer vierten Gruppe von Zwischenwerten durch Kombinieren eines dritten Teilsatzes der Eingangskomponenten und der ersten, zweiten und dritten Gruppen von Zwischenwerten;

Bestimmen einer fünften Gruppe von Zwischenwerten durch Kombinieren eines vierten Teilsatzes der Eingangskomponenten und der ersten, zweiten, dritten und vierten Gruppen von Zwischenwerten mit einem zweiten Satz von bestimmten Konstanten, deren jede eine Funktion von diskreten Kosinus-Koeffizienten und digitalen Video-Gewichtungskonstanten ist;

Bestimmen einer sechsten Gruppe von Zwischenwerten durch Kombinieren eines fünften Teilsatzes der Eingangskomponenten und der ersten, zweiten, dritten, vierten und fünften Gruppen von Zwischenwerten;

Bestimmen einer siebten Gruppe von Zwischenwerten durch Kombinieren eines sechsten Teilsatzes der Eingangskomponenten und der ersten, zweiten, dritten, vierten, fünften und sechsten Gruppen von Zwischenwerten mit einem dritten Satz von bestimmten Konstanten, deren jede eine Funktion von diskreten Kosinus-Koeffizienten und digitalen Video-Gewichtungskonstanten ist;

Bestimmen einer achten Gruppe von Zwischenwerten durch Kombinieren eines siebten Teilsatzes der Eingangskomponenten und der ersten, zweiten, dritten, vierten, fünften, sechsten und siebten Gruppen von Zwischenwerten;

Bestimmen von Ausgangs- bzw. Abgabekomponenten durch Kombinieren eines achten Teilsatzes der Eingangskomponenten und der ersten, zweiten, dritten, vierten, fünften, sechsten, siebten und achten Gruppen von Zwischenwerten mit einem vierten Satz von bestimmten Konstanten, deren jede eine Funktion von diskreten Kosinus-Koeffizienten und digitalen Video-Gewichtungskonstanten ist;

und Abgeben der Ausgangskomponenten an einen Ausgangsanschluss als gewichtete komprimierte digitale Darstellungen eines Bildes.

2. Verfahren zum Durchführen einer Datenkompression in einem digitalen Video-Codierer nach Anspruch 1, wobei das Verfahren die Operationen umfasst:

Empfangen von acht Eingangswerten $IN_0$ -$IN_7$, die Pixelinformationen eines Bildes darstellen;
Bestimmen eines ersten Zwischenwertes $a_0$ gleich $IN_0+IN_7$;
Bestimmen eines ersten Zwischenwertes $a_1$ gleich $IN_1+IN_6$;
Bestimmen eines ersten Zwischenwertes $a_2$ gleich $IN_2+IN_5$;
Bestimmen eines ersten Zwischenwertes $a_3$ gleich $IN_3+IN_4$;
Bestimmen eines ersten Zwischenwertes $a_4$ gleich $IN_0-IN_7$;
Bestimmen eines ersten Zwischenwertes $a_5$ gleich $IN_1-IN_6$;
Bestimmen eines ersten Zwischenwertes $a_6$ gleich $IN_2-IN_5$;
Bestimmen eines ersten Zwischenwertes $a_7$ gleich $IN_3-IN_4$;
Bestimmen eines zweiten Zwischenwertes $b_0$ gleich $a_0+a_3$;
Bestimmen eines zweiten Zwischenwertes $b_1$ gleich $a_1+a_2$;
Bestimmen eines zweiten Zwischenwertes $b_2$ gleich $a_0-a_3$;
Bestimmen eines zweiten Zwischenwertes $b_3$ gleich $a_1-a_2$;
Bestimmen eines zweiten Zwischenwertes $b_4$ gleich $a_5+a_6$;
Bestimmen eines zweiten Zwischenwertes $b_5$ gleich $a_4+a_7$;
Multiplizieren von $a_4$ mit der Konstanten $2\cos(\pi/4)$, um einen dritten Zwischenwert $c_0$ zu erhalten;
Multiplizieren von $a_5$ mit der Konstanten $2\cos(\pi/4)$, um einen dritten Zwischenwert $c_1$ zu erhalten;
Bestimmen eines vierten Zwischenwertes $d_0$ gleich $b_2+b_3$;
Bestimmen eines vierten Zwischenwertes $d_1$ gleich $c_0+b_4$;
Bestimmen eines vierten Zwischenwertes $d_2$ gleich $c_1+b_5$;
Bestimmen eines vierten Zwischenwertes $d_3$ gleich $c_0-b_4$;
Bestimmen eines vierten Zwischenwertes $d_4$ gleich $c_1-b_5$;
Multiplizieren von $b_2$ mit der Konstanten $2\cos(\pi/4)$, um einen fünften Zwischenwert $e_0$ zu erhalten;
Bestimmen eines sechsten Zwischenwertes $f_0$ gleich $b_0+b_1$;
Bestimmen eines sechsten Zwischenwertes $f_1$ gleich $b_0-b_1$;
Bestimmen eines sechsten Zwischenwertes $f_2$ gleich $e_0+d_0$;
Bestimmen eines sechsten Zwischenwertes $f_3$ gleich $e_0-d_0$;
Bestimmen eines sechsten Zwischenwertes $f_4$ gleich $d_1+d_2$;
Bestimmen eines sechsten Zwischenwertes $f_5$ gleich $d_3+d_4$;
Multiplizieren von $d_1$ mit der Konstanten $2\cos(\pi/8)$, um einen siebten Zwischenwert $g_0$ zu erhalten;
Multiplizieren von $d_3$ mit der Konstanten $2\cos(3\pi/8)$, um einen siebten Zwischenwert $g_1$ zu erhalten;
Bestimmen eines achten Zwischenwertes $h_0$ gleich $g_0+f_4$;
Bestimmen eines achten Zwischenwertes $h_1$ gleich $g_0-f_4$;
Bestimmen eines achten Zwischenwertes $h_2$ gleich $g_1+f_5$;
Bestimmen eines achten Zwischenwertes $h_3$ gleich $g_1-f_5$;
Multiplizieren von $f_1$ mit der Konstanten $7/8$, um ein Ausgangssignal $OUT_4$ zu erhalten;
Verschieben von $f_2$, um ein Ausgangssignal $OUT_2$ zu erhalten;
Multiplizieren von $h_0$ mit der Konstanten $1/4\cos(\pi/8)$, um ein Ausgangssignal $OUT_1$ zu erhalten;
Multiplizieren von $h_2$ mit der Konstanten $1/2\cos(\pi/4)$, um ein Ausgangssignal $OUT_3$ zu erhalten;
und Abgeben der Ausgangssignale $OUT_1$-$OUT_4$, $f_0$, $f_3$, $h_1$ und $h_3$, die gewichtete komprimierte digitale Darstellungen eines Bildes darstellen.

3. Datenkompressionssystem zum Durchführen einer Datenkompression in einem digitalen Video-Codierer, wobei die diskrete Kosinus-Transformation und Gewichtungsfunktionen kombiniert sind, umfassend:

eine Eingangseinrichtung (800) zum Empfangen einer Mehrzahl von Eingangskomponenten, welche Pixelinformationen eines Bildes darstellen;

einen ersten Prozessor (810) zum Bestimmen einer ersten Gruppe von Zwischenwerten durch Kombinieren von Teilsätzen der Eingangskomponenten;

einen zweiten Prozessor (820) zum Bestimmen einer zweiten Gruppe von Zwischenwerten durch Kombinieren eines ersten Teilsatzes der Eingangskomponenten und der ersten Gruppe von Zwischenwerten;

einen dritten Prozessor (830) zum Bestimmen einer dritten Gruppe von Zwischenwerten durch Kombinieren eines zweiten Teilsatzes der Eingangskomponenten und der ersten und zweiten Gruppen von Zwischenwerten mit einem ersten Satz von bestimmten Konstanten, deren jede eine Funktion von diskreten Kosinus-Koeffizienten und digitalen Video-Gewichtungskonstanten ist;

einen vierten Prozessor (840) zum Bestimmen einer vierten Gruppe von Zwischenwerten durch Kombinieren eines dritten Teilsatzes der Eingangskomponenten und der ersten, zweiten und dritten Gruppen von Zwischenwerten;

einen fünften Prozessor (850) zum Bestimmen einer fünften Gruppe von Zwischenwerten durch Kombinieren eines vierten Teilsatzes der Eingangskomponenten und der ersten, zweiten, dritten und vierten Gruppen von Zwischenwerten mit einem zweiten Satz von bestimmten Konstanten, deren jede eine Funktion von diskreten Kosinus-Koeffizienten und digitalen Video-Gewichtungskonstanten ist;

einen sechsten Prozessor (860) zum Bestimmen einer sechsten Gruppe von Zwischenwerten durch Kombinieren eines fünften Teilsatzes der Eingangskomponenten und der ersten, zweiten, dritten, vierten und fünften Gruppen von Zwischenwerten;

einen siebten Prozessor (870) zum Bestimmen einer siebten Gruppe von Zwischenwerten durch Kombinieren eines sechsten Teilsatzes der Eingangskomponenten und der ersten, zweiten, dritten, vierten, fünften und sechsten Gruppen von Zwischenwerten mit einem dritten Satz von bestimmten Konstanten, deren jede eine Funktion von diskreten Kosinus-Koeffizienten und digitalen Video-Gewichtungskonstanten ist;

einen achten Prozessor (880) zum Bestimmen einer achten Gruppe von Zwischenwerten durch Kombinieren eines siebten Teilsatzes der Eingangskomponenten und der ersten, zweiten, dritten, vierten, fünften, sechsten und siebten Gruppen von Zwischenwerten,

einen neunten Prozessor (890) zum Bestimmen von Abgabe- bzw. Ausgangskomponenten durch Kombinieren eines achten Teilsatzes der Eingangskomponenten und der ersten, zweiten, dritten, vierten, fünften, sechsten, siebten und achten Gruppen von Zwischenwerten mit einem vierten Satz von bestimmten Konstanten, deren jede eine Funktion von diskreten Kosinus-Koeffizienten und digitalen Video-Gewichtungskonstanten ist; und eine Abgabe- bzw. Ausgangseinrichtung zum Abgeben der Abgabe- bzw. Ausgangskomponenten an einen Ausgangsanschluss als gewichtete komprimierte digitale Darstellungen eines Bildes.

4. Datenkompressionssystem nach Anspruch 3, umfassend:

eine Eingangseinrichtung (720) zum Empfangen von acht Eingangswerten $IN_0$-$IN_7$, die Pixelinformationen eines Bildes darstellen;

einen Prozessor (710) zum Durchführen der folgenden Bestimmungen:

Bestimmen eines ersten Zwischenwertes $a_0$ gleich $IN_0+IN_7$;
Bestimmen eines ersten Zwischenwertes $a_1$ gleich $IN_1+IN_6$;
Bestimmen eines ersten Zwischenwertes $a_2$ gleich $IN_2+IN_5$;
Bestimmen eines ersten Zwischenwertes $a_3$ gleich $IN_3+IN_4$;
Bestimmen eines ersten Zwischenwertes $a_4$ gleich $IN_0-IN_7$;
Bestimmen eines ersten Zwischenwertes $a_5$ gleich $IN_1-IN_6$;
Bestimmen eines ersten Zwischenwertes $a_6$ gleich $IN_2-IN_5$;
Bestimmen eines ersten Zwischenwertes $a_7$ gleich $IN_3-IN_4$;
Bestimmen eines zweiten Zwischenwertes $b_0$ gleich $a_0+a_3$;
Bestimmen eines zweiten Zwischenwertes $b_1$ gleich $a_1+a_2$;
Bestimmen eines zweiten Zwischenwertes $b_2$ gleich $a_0-a_3$;
Bestimmen eines zweiten Zwischenwertes $b_3$ gleich $a_1-a_2$;
Bestimmen eines zweiten Zwischenwertes $b_4$ gleich $a_5+a_6$;
Bestimmen eines zweiten Zwischenwertes $b_5$ gleich $a_4+a_7$;
Multiplizieren von $a_4$ mit der Konstanten $2\cos(\pi/4)$, um einen dritten Zwischenwert $c_0$ zu erhalten;
Multiplizieren von $a_5$ mit der Konstanten $2\cos(\pi/4)$, um einen dritten Zwischenwert $c_1$ zu erhalten;
Bestimmen eines vierten Zwischenwertes $d_0$ gleich $b_2+b_3$;
Bestimmen eines vierten Zwischenwertes $d_1$ gleich $c_0+b_4$;
Bestimmen eines vierten Zwischenwertes $d_2$ gleich $c_1+b_5$;

Bestimmen eines vierten Zwischenwertes $d_3$ gleich $c_0-b_4$;

Bestimmen eines vierten Zwischenwertes $d_4$ gleich $c_1-b_5$;

Multiplizieren von $b_2$ mit der Konstanten $2\cos(\pi/4)$, um einen fünften Zwischenwert $e_0$ zu erhalten;

Bestimmen eines sechsten Zwischenwertes $f_0$ gleich $b_0+b_1$;

Bestimmen eines sechsten Zwischenwertes $f_1$ gleich $b_0-b_1$;

Bestimmen eines sechsten Zwischenwertes $f_2$ gleich $e_0+d_0$;

Bestimmen eines sechsten Zwischenwertes $f_3$ gleich $e_0-d_0$;

Bestimmen eines sechsten Zwischenwertes $f_4$ gleich $d_1+d_2$;

Bestimmen eines sechsten Zwischenwertes $f_5$ gleich $d_3+d_4$;

Multiplizieren von $d_1$ mit der Konstanten $2\cos(\pi/8)$, um einen siebten Zwischenwert $g_0$ zu erhalten;

Multiplizieren von $d_3$ mit der Konstanten $2\cos(3\pi/8)$, um einen siebten Zwischenwert $g_1$ zu erhalten;

Bestimmen eines achten Zwischenwertes $h_0$ gleich $g_0+f_4$;

Bestimmen eines achten Zwischenwertes $h_1$ gleich $g_0-f_4$;

Bestimmen eines achten Zwischenwertes $h_2$ gleich $g_1+f_5$;

Bestimmen eines achten Zwischenwertes $h_3$ gleich $g_1-f_5$;

Multiplizieren von $f_1$ mit der Konstanten 7/8, um ein Ausgangssignal $OUT_4$ zu erhalten;

Verschieben von $f_2$, um ein Ausgangssignal $OUT_2$ zu erhalten;

Multiplizieren von $h_0$ mit der Konstanten $1/4\cos(\pi/8)$, um ein Ausgangssignal $OUT_1$ zu erhalten;

Multiplizieren von $h_2$ mit der Konstanten $1/2\cos(\pi/4)$, um ein Ausgangssignal $OUT_3$ zu erhalten;

und eine Abgabe- bzw. Ausgangseinrichtung (720) zum Abgeben der Ausgangssignal $OUT_1$-$OUT_4$, $f_0$, $f_3$, $h_1$ und $h_3$, die gewichtete komprimierte digitale Darstellungen eines Bildes darstellen.

**5.** Verfahren zum Durchführen einer Datendekompression in einem digitalen Video-Decoder, wobei die inverse diskrete Kosinus-Transformation und Gewichtungsfunktionen kombiniert werden, umfassend die durch einen Prozessor ausgeführten Schritte:

Empfangen einer Mehrzahl von Eingangskomponenten, die gewichtete komprimierte digitale Darstellungen eines Bildes repräsentieren;

Bestimmen einer ersten Gruppe von Zwischenwerten durch Kombinieren von ausgewählten Eingangskomponenten mit einem ersten Satz von bestimmten Konstanten, deren jede eine Funktion von diskreten Kosinus-Koeffizienten und digitalen Video-Gewichtungskonstanten ist;

Bestimmen einer zweiten Gruppe von Zwischenwerten durch Kombinieren eines ersten Teilsatzes der Eingangskomponenten und der ersten Gruppe von Zwischenwerten;

Bestimmen einer dritten Gruppe von Zwischenwerten durch Kombinieren eines zweiten Teilsatzes der Eingangskomponenten und der ersten und zweiten Gruppen von Zwischenwerten mit einem zweiten Satz von bestimmten Konstanten, deren jede eine Funktion von diskreten Kosinus-Koeffizienten und digitalen Video-Gewichtungskonstanten ist;

Bestimmen einer vierten Gruppe von Zwischenwerten durch Kombinieren eines dritten Teilsatzes der Eingangskomponenten und der ersten, zweiten und dritten Gruppen von Zwi schenwerten;

Bestimmen einer fünften Gruppe von Zwischenwerten durch Kombinieren eines vierten Teilsatzes der Eingangskomponenten und der ersten, zweiten, dritten und vierten Gruppen von Zwischenwerten;

Bestimmen einer sechsten Gruppe von Zwischenwerten durch Kombinieren eines fünftes Teilsatzes der Eingangskomponenten und der ersten, zweiten, dritten, vierten und fünften Gruppen von Zwischenwerten mit einem dritten Satz von bestimmten Konstanten, deren jede eine Funktion von diskreten Kosinus-Koeffizienten und digitalen Video-Gewichtungskonstanten ist;

Bestimmen einer siebten Gruppe von Zwischenwerten durch Kombinieren eines sechsten Teilsatzes der Eingangskomponenten und der ersten, zweiten, dritten, vierten, fünften und sechsten Gruppen von Zwischenwerten;

Bestimmen von Abgabe- bzw. Ausgangskomponenten durch Kombinieren eines siebten Teilsatzes der Eingangskomponenten und der ersten, zweiten, dritten, vierten, fünften, sechsten und siebten Gruppen von Zwischenwerten;

und Abgeben der Ausgangskomponenten der dekomprimierten Pixel-Informationen eines Bildes.

**6.** Verfahren zum Durchführen einer Datendekompression nach Anspruch 5, umfassend die Operationen:

Empfangen von acht Eingangswerten $IN_0$-$IN_7$, welche digitale Darstellungen eines Bildes repräsentieren;

Bestimmen eines ersten Zwischenwertes $a_0$ durch Multiplizieren von $IN_4$ mit der Konstanten 8/7;

Bestimmen eines ersten Zwischenwertes $a_1$ durch Verschieben von $IN_2$;

Bestimmen eines ersten Zwischenwertes $a_2$ durch Multiplizieren von $IN_1$ mit der Konstanten $4\cos(\pi/8)$;

Bestimmen eines ersten Zwischenwertes $a_3$ durch Multiplizieren von $IN_3$ mit der Konstanten $2\cos(\pi/4)$;

Bestimmen eines zweiten Zwischenwertes $b_0$ gleich $IN_0+a_0$;

Bestimmen eines zweiten Zwischenwertes $b_1$ gleich $IN_0-a_0$;

Bestimmen eines zweiten Zwischenwertes $b_2$ gleich $a_1+IN_6$;

Bestimmen eines zweiten Zwischenwertes $b_3$ gleich $a_1-IN_6$;

Bestimmen eines zweiten Zwischenwertes $b_4$ gleich $a_2+IN_7$;

Bestimmen eines zweiten Zwischenwertes $b_5$ gleich $a_2-IN_7$;

Bestimmen eines zweiten Zwischenwertes $b_6$ gleich $a_3+IN_5$;

Bestimmen eines zweiten Zwischenwertes $b_7$ gleich $a_3-IN_5$;

Bestimmen eines dritten Zwischenwertes $c_0$ durch Multiplizieren von $b_2$ mit der Konstanten $\cos(\pi/4)$;

Bestimmen eines dritten Zwischenwertes $c_1$ durch Multiplizieren von $b_4$ mit der Konstanten $2\cos(3\pi/8)\cos(\pi/4)$;

Bestimmen eines dritten Zwischenwertes $c_2$ durch Multiplizieren von $b_6$ mit der Konstanten $2\cos(\pi/8)\cos(\pi/4)$;

Bestimmen eines vierten Zwischenwertes $d_0$ gleich $b_3-c_0$;

Bestimmen eines vierten Zwischenwertes $d_1$ gleich $b_5-c_1$;

Bestimmen eines vierten Zwischenwertes $d_2$ gleich $b_7-c_2$;

Bestimmen eines fünften Zwischenwertes $e_0$ gleich $b_0+c_0$;

Bestimmen eines fünften Zwischenwertes $e_1$ gleich $b_1+d_0$;

Bestimmen eines fünften Zwischenwertes $e_2$ gleich $b_0-c_0$;

Bestimmen eines fünften Zwischenwertes $e_3$ gleich $b_1-d_0$;

Bestimmen eines fünften Zwischenwertes $e_4$ gleich $c_1+c_2$;

Bestimmen eines fünften Zwischenwertes $e_5$ gleich $d_1+d_2$;

Bestimmen eines fünften Zwischenwertes $e_6$ gleich $c_1-c_2$;

Bestimmen eines fünften Zwischenwertes $e_7$ gleich $d_1-d_2$;

Bestimmen eines sechsten Zwischenwertes $f_0$ durch Multiplizieren von $e_4$ mit der Konstanten $\cos(\pi/4)$;

Bestimmen eines sechsten Zwischenwertes $f_1$ durch Multiplizieren von $e_5$ mit der Konstanten $\cos(\pi/4)$;

Bestimmen eines siebten Zwischenwertes $g_0$ gleich $e_6-f_1$;

Bestimmen eines siebten Zwischenwertes $g_1$ gleich $e_7-f_0$;

Bestimmen eines Ausgangssignals $OUT_0$ gleich $e_o+f_0$;

Bestimmen eines Ausgangssignals $OUT_1$ gleich $e_1+f_1$;

Bestimmen eines Ausgangssignals $OUT_2$ gleich $e_3+g_0$;

Bestimmen eines Ausgangssignals $OUT_3$ gleich $e_2+g_1$

Bestimmen eines Ausgangssignals $OUT_4$ gleich $e_2-g_1$;

Bestimmen eines Ausgangssignals $OUT_5$ gleich $e_3-g_0$;

Bestimmen eines Ausgangssignals $OUT_6$ gleich $e_1-f_1$;

Bestimmen eines Ausgangssignals $OUT_7$ gleich $e_0-f_0$;

und Abgeben der Ausgangssignale $OUT_0$ bis $OUT_7$, die Pixelinformationen eines Bildes darstellen.

7. Datendekompressionssystem zum Durchführen einer Datendekompression in einem digitalen Video-Decoder, wobei die inverse diskrete Kosinus-Transformation und Gewichtungsfunktionen kombiniert werden, umfassend:

eine Eingangseinrichtung (900) für den Empfang einer Mehrzahl von Eingangskomponenten, die gewichtete komprimierte digitale Darstellungen eines Bildes repräsentieren;

einen ersten Prozessor (910) zum Bestimmen einer ersten Gruppe von Zwischenwerten durch Kombinieren von ausgewählten Eingangskomponenten mit einem ersten Satz von bestimmten Konstanten, deren jede eine Funktion von diskreten Kosinus-Koeffizienten und digitalen Video-Gewichtungskonstanten ist;

einen zweiten Prozessor (920) zum Bestimmen einer zweiten Gruppe von Zwischenwerten durch Kombinieren eines ersten Teilsatzes der Eingangskomponenten und der ersten Gruppe von Zwischenwerten;

einen dritten Prozessor (930) zum Bestimmen einer dritten Gruppe von Zwischenwerten durch Kombinieren eines zweiten Teilsatzes der Eingangskomponenten und der ersten und zweiten Gruppen von Zwischenwerten mit einem zweiten Satz von bestimmten Konstanten, deren jede eine Funktion von diskreten Kosinus-Koeffizienten und digitalen Video-Gewichtungskonstanten ist;

einen vierten Prozessor (940) zum Bestimmen einer vierten Gruppe von Zwischenwerten durch Kombinieren eines dritten Teilsatzes der Eingangskomponenten und der ersten, zweiten und dritten Gruppen von Zwischenwerten;

einen fünften Prozessor (950) zum Bestimmen einer fünften Gruppe von Zwischenwerten durch Kombinieren eines vierten Teilsatzes der Eingangskomponenten und der ersten, zweiten, dritten und vierten Gruppen von Zwischenwerten;

einen sechsten Prozessor (960) zum Bestimmen einer sechsten Gruppe von Zwischenwerten durch Kombinieren eines fünften Teilsatzes der Eingangskomponenten und der ersten, zweiten, dritten, vierten und fünften Gruppen von Zwischenwerten mit einem dritten Satz von bestimmten Konstanten, deren jede eine Funktion von diskreten Kosinus-Koeffizienten und digitalen Video-Gewichtungskonstanten ist;

einen siebten Prozessor (970) zum Bestimmen einer siebten Gruppe von Zwischenwerten durch Kombinieren eines sechsten Teilsatzes der Eingangskomponenten und der ersten, zweiten, dritten, vierten, fünften und sechsten Gruppen von Zwischenwerten;

einen achten Prozessor (980) zum Bestimmen von Abgabe- bzw.

Ausgangskomponenten durch Kombinieren eines siebten Teilsatzes der Eingangskomponenten und der ersten, zweiten, dritten, vierten, fünften, sechsten und siebten Gruppen von Zwischenwerten;

und eine Abgabe- bzw. Ausgangseinrichtung (990) zum Abgeben der Ausgangskomponenten der dekomprimierten Pixelinformationen eines Bildes.

**8.** Datendekompressionssystem nach Anspruch 7, umfassend:

eine Eingangseinrichtung (720) für den Empfang von acht Eingangswerten $IN_0$-$IN_7$, die digitale Darstellungen eines Bildes repräsentieren;

einen Prozessor (710) zum Durchführen der folgenden Bestimmungen:

Bestimmen eines ersten Zwischenwertes $a_0$ durch Multiplizieren von $IN_4$ mit der Konstanten 8/7;
Bestimmen eines ersten Zwischenwertes $a_1$ durch Verschieben von $IN_2$;
Bestimmen eines ersten Zwischenwertes $a_2$ durch Multiplizieren von $IN_1$ mit der Konstanten $4\cos(\pi/8)$;
Bestimmen eines ersten Zwischenwertes $a_3$ durch Multiplizieren von $IN_3$ mit der Konstanten $2\cos(\pi/4)$;
Bestimmen eines zweiten Zwischenwertes $b_0$ gleich $IN_0+a_0$;
Bestimmen eines zweiten Zwischenwertes $b_1$ gleich $IN_0-a_0$;
Bestimmen eines zweiten Zwischenwertes $b_2$ gleich $a_1+IN_6$;
Bestimmen eines zweiten Zwischenwertes $b_3$ gleich $a_1-IN_6$;
Bestimmen eines zweiten Zwischenwertes $b_4$ gleich $a_2+IN_7$;
Bestimmen eines zweiten Zwischenwertes $b_5$ gleich $a_2-IN_7$;
Bestimmen eines zweiten Zwischenwertes $b_6$ gleich $a_3+IN_5$;
Bestimmen eines zweiten Zwischenwertes $b_7$ gleich $a_3-IN_5$;
Bestimmen eines dritten Zwischenwertes $c_0$ durch Multiplizieren von $b_2$ mit der Konstanten $\cos(\pi/4)$;
Bestimmen eines dritten Zwischenwertes $c_1$ durch Multiplizieren von $b_4$ mit der Konstanten $2\cos(3\pi/8)\cos(\pi/4)$;
Bestimmen eines dritten Zwischenwertes $c_2$ durch Multiplizieren von $b_6$ mit der Konstanten $2\cos(\pi/8)\cos(\pi/4)$;
Bestimmen eines vierten Zwischenwertes $d_0$ gleich $b_3-c_0$;
Bestimmen eines vierten Zwischenwertes $d_1$ gleich $b_5$_$c_1$;
Bestimmen eines vierten Zwischenwertes $d_2$ gleich $b_7-c_2$;
Bestimmen eines fünften Zwischenwertes $e_0$ gleich $b_0+c_0$;
Bestimmen eines fünften Zwischenwertes $e_1$ gleich $b_1+d_0$;
Bestimmen eines fünften Zwischenwertes $e_2$ gleich $b_0-c_0$;
Bestimmen eines fünften Zwischenwertes $e_3$ gleich $b_1-d_0$;
Bestimmen eines fünften Zwischenwertes $e_4$ gleich $c_1+c_2$;
Bestimmen eines fünften Zwischenwertes $e_5$ gleich $d_1+d_2$;
Bestimmen eines fünften Zwischenwertes $e_6$ gleich $c_1-c_2$;
Bestimmen eines fünften Zwischenwertes $e_7$ gleich $d_1-d_2$;
Bestimmen eines sechsten Zwischenwertes $f_0$ durch Multiplizieren von $e_4$ mit der Konstanten $\cos(\pi/4)$;
Bestimmen eines sechsten Zwischenwertes $f_1$ durch Multiplizieren von $e_5$ mit der Konstanten $\cos(\pi/4)$;
Bestimmen eines siebten Zwischenwertes $g_0$ gleich $e_6-f_1$;
Bestimmen eines siebten Zwischenwertes $g_1$ gleich $e_7-f_0$;
Bestimmen eines Ausgangssignals $OUT_0$ gleich $e_0+f_0$;
Bestimmen eines Ausgangssignals $OUT_1$ gleich $e_1+f_1$;
Bestimmen eines Ausgangssignals $OUT_2$ gleich $e_3+g_0$;
Bestimmen eines Ausgangssignals $OUT_3$ gleich $e_2+g_1$;
Bestimmen eines Ausgangssignals $OUT_4$ gleich $e_2-g_1$;
Bestimmen eines Ausgangssignals $OUT_5$ gleich $e_3-g_0$;

Bestimmen eines Ausgangssignals $OUT_6$ gleich $e_1-f_1$;
Bestimmen eines Ausgangssignals $OUT_7$ gleich $e_0-f_0$;

und eine Abgabe- bzw. Ausgangseinrichtung (710) zum Abgeben der Ausgangssignale $OUT_0$-$OUT_7$, die Pixelinformationen eines Bildes darstellen.

9. Verfahren zum Durchführen einer Datenkompression in einem digitalen Video-Codierer, wobei die diskrete Kosinus-Transformation und Gewichtungsfunktionen kombiniert werden, umfassend die durch einen Prozessor ausgeführten Schritte:

Empfangen einer Mehrzahl von Eingangskomponenten, die Pixelkomponenten eines Bildes darstellen;
Bestimmen einer ersten Gruppe von Zwischenwerten durch Kombinieren von Teilsätzen der Eingangskomponenten;
Bestimmen einer zweiten Gruppe von Zwischenwerten durch Kombinieren eines ersten Teilsatzes der Eingangskomponenten und der ersten Gruppe von Zwischenwerten;
Bestimmen einer dritten Gruppe von Zwischenwerten durch Kombinieren eines zweiten Teilsatzes der Eingangskomponenten und der ersten und zweiten Gruppen von Zwischenwerten mit bestimmten Konstanten, deren jede eine Funktion von diskreten Kosinus-Koeffizienten und digitalen Video-Gewichtungskonstanten ist;
Bestimmen einer vierten Gruppe von Zwischenwerten durch Kombinieren eines dritten Teilsatzes der Eingangskomponenten und der ersten, zweiten und dritten Gruppen von Zwischenwerten;
Bestimmen von Abgabe- bzw. Ausgangskomponenten durch Kombinieren eines vierten Teilsatzes der Eingangskomponenten und der ersten, zweiten, dritten und vierten Gruppen von Zwischenwerten mit einem zweiten Satz von bestimmten Konstanten, deren jede eine Funktion von diskreten Kosinus-Koeffizienten und digitalen Video-Gewichtungskonstanten ist;
und Abgeben der Ausgangskomponenten, die gewichtete komprimierte digitale Darstellungen eines Bildes repräsentieren.

10. Verfahren zum Durchführen einer Datenkompression nach Anspruch 9, umfassend die durch einen Prozessor ausgeführten Schritte:

Empfangen von vier Eingangswerten $IN_0$-$IN_3$, die digitale Darstellungen eines Bildes repräsentieren;
Bestimmen eines ersten Zwischenwertes $a_0$ gleich $IN_0+IN_3$;
Bestimmen eines ersten Zwischenwertes $a_1$ gleich $IN_1+IN_2$;
Bestimmen eines ersten Zwischenwertes $a_2$ gleich $IN_0-IN_3$;
Bestimmen eines ersten Zwischenwertes $a_3$ gleich $IN_1-IN_2$;
Bestimmen eines zweiten Zwischenwertes $b_0$ gleich $a_2+a_3$;
Bestimmen eines dritten Zwischenwertes $c_0$ durch Multiplizieren von $a_2$ mit der Konstanten 2;
Bestimmen eines vierten Zwischenwertes $d_0$ gleich $a_0+a_1$;
Bestimmen eines vierten Zwischenwertes $d_1$ gleich $a_0-a_1$;
Bestimmen eines vierten Zwischenwertes $d_2$ gleich $c_0+b_0$;
Bestimmen eines vierten Zwischenwertes $d_3$ gleich $c_0-b_0$;
Bestimmen eines Ausgangssignals $OUT_0$ gleich $d_0$;
Bestimmen eines Ausgangssignals $OUT_1$ durch Verschieben von $d_2$;
Bestimmen eines Ausgangssignals $OUT_2$ durch Multiplizieren von $d_1$ mit der Konstanten 7/8;
Bestimmen eines Ausgangssignals $OUT_3$ gleich $d_3$;
und Abgeben der Ausgangsignale $OUT_0$-$OUT_3$, die gewichtete komprimierte digitale Darstellungen eines Bildes repräsentieren.

11. Datenkompressionssystem zum Durchführen einer Datenkompression in einem digitalen Video-Codierer, wobei die diskrete Kosinus-Transformation und Gewichtungsfunktionen kombiniert werden bzw. sind, umfassend:

eine Eingangseinrichtung (1000) für den Empfang einer Mehrzahl von Eingangskomponenten, die Pixelinformationen eines Bildes darstellen;
einen ersten Prozessor (1010) zum Bestimmen einer ersten Gruppe von Zwischenwerten durch Kombinieren von Teilsätzen der Eingangskomponenten;
einen zweiten Prozessor (1020) zum Bestimmen einer zweiten Gruppe von Zwischenwerten durch Kombinieren eines ersten Teilsatzes der Eingangskomponenten und der ersten Gruppe von Zwischenwerten;
einen dritten Prozessor (1030) zum Bestimmen einer dritten Gruppe von Zwischenwerten durch Kombinieren eines zweiten Teilsatzes der Eingangskomponenten und der ersten und zweiten Sätze von Zwischenwerten mit bestimmten Konstanten, deren jede eine Funktion von diskreten Kosinus-Koeffizienten und digitalen Video-Gewichtungskonstanten ist;

einen vierten Prozessor (1040) zum Bestimmen einer vierten Gruppe von Zwischenwerten durch Kombinieren eines dritten Teilsatzes der Eingangskomponenten und der ersten, zweiten und dritten Gruppen von Zwischenwerten;

einen fünften Prozessor (1050) zum Bestimmen von Abgabe- bzw. Ausgangskomponenten durch Kombinieren eines vierten Teilsatzes der Eingangskomponenten und der ersten, zweiten, dritten und vierten Gruppen von Zwischenwerten mit bestimmten Konstanten, deren jede eine Funktion von diskreten Kosinus-Koeffizienten und digitalen Video-Gewichtungskonstanten ist;

und eine Abgabe- bzw. Ausgangseinrichtung (1090) zum Abgeben der Ausgangskomponenten als gewichtete komprimierte digitale Darstellungen eines Bildes.

**12.** Datenkompressionssystem nach Anspruch 11, umfassend:

eine Eingangseinrichtung (720) für den Empfang von vier Eingangswerten $IN_0$-$IN_3$, die Pixelkomponenten eines Bildes darstellen;

einen Prozessor (710) zum Durchführen der folgenden Bestimmungen:

Empfangen von vier Eingangswerten $IN_0$-$IN_3$, die digitale Darstellungen eines Bildes repräsentieren;
Bestimmen eines ersten Zwischenwertes $a_0$ gleich $IN_0 + IN_3$;
Bestimmen eines ersten Zwischenwertes $a_1$ gleich $IN_1 + IN_2$;
Bestimmen eines ersten Zwischenwertes $a_2$ gleich $IN_0 - IN_3$;
Bestimmen eines ersten Zwischenwertes $a_3$ gleich $IN_1 - IN_2$;
Bestimmen eines zweiten Zwischenwertes $b_0$ gleich $a_2 + a_3$;
Bestimmen eines dritten Zwischenwertes $c_0$ durch Multiplizieren von $a_2$ mit der Konstanten 2;
Bestimmen eines vierten Zwischenwertes $d_0$ gleich $a_0 + a_1$;
Bestimmen eines vierten Zwischenwertes $d_1$ gleich $a_0 - a_1$;
Bestimmen eines vierten Zwischenwertes $d_2$ gleich $c_0 + b_0$;
Bestimmen eines vierten Zwischenwertes $d_3$ gleich $c_0 - b_0$;
Bestimmen eines Ausgangssignals $OUT_0$ gleich $d_0$;
Bestimmen eines Ausgangssignals $OUT_1$ durch Verschieben von $d_2$;
Bestimmen eines Ausgangssignals $OUT_2$ durch Multiplizieren von $d_1$ mit der Konstanten 7/8; und
Bestimmen eines Ausgangssignals $OUT_3$ gleich $d_3$;

und eine Abgabe- bzw. Ausgangseinrichtung (720) zum Abgeben der Ausgangsignale $OUT_0$-$OUT_3$, die gewichtete komprimierte digitale Darstellungen eines Bildes repräsentieren.

**13.** Verfahren zum Durchführen einer Datendekompression in einem digitalen Video-Decoder, wobei die inverse diskrete Kosinus-Transformation und Gewichtungsfunktionen kombiniert werden, umfassend die durch einen Prozessor ausgeführten Schritte:

Empfangen einer Mehrzahl von Eingangskomponenten, die gewichtete komprimierte digitale Darstellungen eines Bildes repräsentieren;
Bestimmen einer ersten Gruppe von Zwischenwerten durch Kombinieren eines Teilsatzes der Eingangskomponenten mit einem ersten Satz von bestimmten Konstanten, deren jede eine Funktion von diskreten Kosinus-Koeffizienten und digitalen Video-Gewichtungskonstanten ist;
Bestimmen einer zweiten Gruppe von Zwischenwerten durch Kombinieren eines ersten Teilsatzes der Eingangskomponenten und der ersten Gruppe von Zwischenwerten;
Bestimmen einer dritten Gruppe von Zwischenwerten durch Kombinieren eines zweiten Teilsatzes der Eingangskomponenten und der ersten und zweiten Gruppen von Zwischenwerten mit bestimmten Konstanten, deren jede eine Funktion von diskreten Kosinus-Koeffizienten und digitalen Video-Gewichtungskonstanten ist;
Bestimmen einer vierten Gruppe von Zwischenwerten durch Kombinieren eines dritten Teilsatzes der Eingangskomponenten und der ersten, zweiten und dritten Gruppen von Zwischenwerten;
Bestimmen von Abgabe- bzw. Ausgangskomponenten durch Kombinieren eines vierten Teilsatzes der Eingangskomponenten und der ersten, zweiten, dritten und vierten Gruppen von Zwischenwerten;
und Abgeben der Ausgangskomponenten, die Pixelinformationen eines Bildes darstellen.

**14.** Verfahren zum Durchführen einer Datendekompression nach Anspruch 13, umfassend die durch einen Prozessor ausgeführten Schritte:

Empfangen von vier Eingangswerten $IN_0$-$IN_3$, die gewichtete komprimierte digitale Darstellungen eines Bildes repräsentieren;

Bestimmen eines ersten Zwischenwertes $a_0$ durch Verschieben von $IN_1$;

Bestimmen eines ersten Zwischenwertes $a_1$ durch Multiplizieren von $a_0$ mit der Konstanten 8/7;

Bestimmen eines zweiten Zwischenwertes $b_0$ gleich $IN_0$+$a_1$;

Bestimmen eines zweiten Zwischenwertes $b_1$ gleich $a_0$+$IN_3$;

Bestimmen eines zweiten Zwischenwertes $b_2$ gleich $IN_0$-$a_1$;

Bestimmen eines zweiten Zwischenwertes $b_3$ gleich $a_0$-$IN_3$;

Bestimmen eines dritten Zwischenwertes $c_0$ durch Multiplizieren von $b_2$ mit der Konstanten 1/2;

Bestimmen eines vierten Zwischenwertes $d_0$ gleich $b_1$-$b_3$;

Bestimmen eines Ausgangssignals $OUT_0$ gleich $b_0$+$b_1$;

Bestimmen eines Ausgangssignals $OUT_1$ gleich $b_0$-$b_1$;

Bestimmen eines Ausgangssignals $OUT_2$ gleich $c_0$+$d_0$;

Bestimmen eines Ausgangssignals $OUT_3$ gleich $c_0$-$d_0$;

Kombinieren der Ausgangssignal $OUT_0$ bis $OUT_3$ zur Bildung von dekomprimierten Pixelinformationen eines Bildes.

**15.** Datendekompressionssystem zum Durchführen einer Datendekompression in einem digitalen Video-Decoder, wobei die inverse diskrete Kosinus-Transformation und Gewichtungsfunktionen kombiniert werden bzw. sind, umfassend:

eine Eingangseinrichtung (1100) für den Empfang einer Mehrzahl von Eingangskomponenten, die gewichtete komprimierte digitale Darstellungen eines Bildes repräsentieren;

einen ersten Prozessor (1110) zum Bestimmen einer ersten Gruppe von Zwischenwerten durch Kombinieren eines Teilsatzes der Eingangskomponenten mit einem ersten Satz von bestimmten Konstanten, deren jede eine Funktion von diskreten Kosinus-Koeffizienten und digitalen Video-Gewichtungskonstanten ist;

einen zweiten Prozessor (1120) zum Bestimmen einer zweiten Gruppe von Zwischenwerten durch Kombinieren eines ersten Teilsatzes der Eingangskomponenten und der ersten Gruppe von Zwischenwerten;

einen dritten Prozessor (1130) zum Bestimmen einer dritten Gruppe von Zwischenwerten durch Kombinieren eines zweiten Teilsatzes der Eingangskomponenten und der ersten und zweiten Gruppen von Zwischenwerten mit dem zweiten Satz von bestimmten Konstanten, deren jede eine Funktion von diskreten Kosinus-Koeffizienten und digitalen Video-Gewichtungskonstanten ist;

einen vierten Prozessor (1140) zum Bestimmen einer vierten Gruppe von Zwischenwerten durch Kombinieren eines dritten Teilsatzes der Eingangskomponenten und der ersten, zweiten und dritten Gruppen von Zwischenwerten;

einen fünften Prozessor (1150) zum Bestimmen von Abgabe- bzw. Ausgangskomponenten durch Kombinieren eines vierten Teilsatzes der Eingangskomponenten und der ersten, zweiten, dritten und vierten Gruppen von Zwischenwerten;

und eine Abgabe- bzw. Ausgangseinrichtung (1190) zum Abgeben der Ausgangskomponenten, die dekomprimierte Pixelkomponenten eines Bildes darstellen.

**16.** Datendekompressionssystem nach Anspruch 15, umfassend:

eine Eingangseinrichtung (720) für den Empfang von vier Eingangswerten $IN_0$-$IN_3$, die gewichtete komprimierte digitale Darstellungen eines Bildes repräsentieren;

einen Prozessor (710) zum Durchführen der folgenden Bestimmungen:

Bestimmen eines ersten Zwischenwertes $a_0$ durch Verschieben von $IN_1$;

Bestimmen eines ersten Zwischenwertes $a_1$ durch Multiplizieren von $a_0$ mit der Konstanten 8/7;

Bestimmen eines zweiten Zwischenwertes $b_0$ gleich $IN_0$+$a_1$;

Bestimmen eines zweiten Zwischenwertes $b_1$ gleich $a_0$+$IN_3$;

Bestimmen eines zweiten Zwischenwertes $b_2$ gleich $IN_0$-$a_1$;

Bestimmen eines zweiten Zwischenwertes $b_3$ gleich $a_0$-$IN_3$;

Bestimmen eines dritten Zwischenwertes $c_0$ durch Multiplizieren von $b_2$ mit der Konstanten 1/2;

Bestimmen eines vierten Zwischenwertes $d_0$ gleich $b_1$-$b_3$;

Bestimmen eines Ausgangssignals $OUT_0$ gleich $b_0+b_1$;
Bestimmen eines Ausgangssignals $OUT_1$ gleich $b_0-b_1$;
Bestimmen eines Ausgangssignals $OUT_2$ gleich $c_0+d_0$;
Bestimmen eines Ausgangssignals $OUT_3$ gleich $c_0-d_0$;

und eine Abgabe- bzw. Ausgangseinrichtung (710) zum Bereitstellen der Ausgangsignale $OUT_0$-$OUT_7$, die dekomprimierte Pixelkomponenten eines Bildes darstellen.

## Revendications

1. Procédé d'exécution d'une compression de données dans un codeur vidéo numérique, dans lequel on combine les fonctions de transformation cosinus discrète et de pondération, le procédé comprenant les étapes effectuées par un processeur consistant :

à recevoir une pluralité de composantes d'entrée représentant de l'information de pixels d'une image ;
à déterminer un premier groupe de valeurs intermédiaires en combinant des sous-ensembles des composantes d'entrée ;
à déterminer un deuxième groupe de valeurs intermédiaires en combinant un premier sous-ensemble des composantes d'entrée et le premier groupe dé valeurs intermédiaires ;
à déterminer un troisième groupe de valeurs intermédiaires en combinant un deuxième sous-ensemble des composantes d'entrée et les premier et deuxième groupes de valeurs intermédiaires avec un premier ensemble de constantes prédéterminées, chaque constante prédéterminée étant une fonction de coefficients cosinus discrets et de constantes de pondération de vidéo numérique ;
à déterminer un quatrième groupe de valeurs intermédiaires en combinant un troisième sous-ensemble des composantes d'entrée et les premier, deuxième et troisième groupes de valeurs intermédiaires ;
à déterminer un cinquième groupe de valeurs intermédiaires en combinant un quatrième sous-ensemble des composantes d'entrée et les premier, deuxième, troisième et quatrième groupes de valeurs intermédiaires avec un deuxième ensemble de constantes prédéterminées, chaque constante prédéterminée étant une fonction de coefficients cosinus discrets et de constantes de pondération de vidéo numérique ;
à déterminer un sixième groupe de valeurs intermédiaires en combinant un cinquième sous-ensemble des composantes d'entrée et les premier, deuxième, troisième, quatrième et cinquième groupes de valeurs intermédiaires ;
à déterminer un septième groupe de valeurs intermédiaires en combinant un sixième sous-ensemble des composantes d'entrée et les premier, deuxième, troisième, quatrième, cinquième et sixième groupes de valeurs intermédiaires avec un troisième ensemble de constantes prédéterminées, chaque constante prédéterminée étant une fonction de coefficients cosinus discrets et de constantes de pondération de vidéo numérique ;
à déterminer un huitième groupe de valeurs intermédiaires en combinant un septième sous-ensemble des composantes d'entrée et les premier, deuxième, troisième, quatrième, cinquième, sixième et septième groupes de valeurs intermédiaires ;
à déterminer des composantes de sortie en combinant un huitième sous-ensemble des composantes d'entrée et les premier, deuxième, troisième, quatrième, cinquième, sixième, septième et huitième groupes de valeurs intermédiaires avec un quatrième ensemble de constantes prédéterminées, chaque constante prédéterminée étant une fonction de coefficients cosinus discrets et de constantes de pondération de vidéo numérique ; et
à délivrer les composantes de sortie à une borne de sortie en tant que représentations numériques comprimées, pondérées, d'une image.

2. Procédé d'exécution d'une compression de données dans un codeur vidéo numérique selon la revendication 1, le procédé comprenant les opérations consistant :

à recevoir huit valeurs d'entrée, $IN_0$ à $IN_7$, représentant de l'information de pixels d'une image ;
à déterminer une première valeur intermédiaire $a_0$ égale à $IN_0 + IN_7$ ;
à déterminer une première valeur intermédiaire $a_1$ égale à $IN_1 + IN_6$ ;
à déterminer une première valeur intermédiaire $a_2$ égale à $IN_2 + IN_5$ ;
à déterminer une première valeur intermédiaire $a_3$ égale à $IN_3 + IN_4$ ;
à déterminer une première valeur intermédiaire $a_4$ égale à $IN_0 - IN_7$;
à déterminer une première valeur intermédiaire $a_5$ égale à $IN_1 - IN_6$ ;
à déterminer une première valeur intermédiaire $a_6$ égale à $IN_2 - IN_5$ ;

à déterminer une première valeur intermédiaire $a_7$ égale à $IN_3 - IN_4$ ;

à déterminer une deuxième valeur intermédiaire $b_0$ égale à $a_0 + a_3$ ;

à déterminer une deuxième valeur intermédiaire $b_1$ égale à $a_1 + a_2$ ;

à déterminer une deuxième valeur intermédiaire $b_2$ égale à $a_0 - a_3$ ;

à déterminer une deuxième valeur intermédiaire $b_3$ égale à $a_1 - a_2$ ;

à déterminer une deuxième valeur intermédiaire $b_4$ égale à $a_5 + a_6$ ;

à déterminer une deuxième valeur intermédiaire $b_5$ égale à $a_4 + a_7$ ;

à multiplier $a_4$ par la constante $2\cos(\pi/4)$ pour obtenir une troisième valeur intermédiaire $c_0$ ;

à multiplier $a_5$ par la constante $2\cos(\pi/4)$ pour obtenir une troisième valeur intermédiaire $c_1$ ;

à déterminer une quatrième valeur intermédiaire $d_0$ égale à $b_2 + b_3$ ;

à déterminer une quatrième valeur intermédiaire $d_1$ égale à $c_0 + b_4$ ;

à déterminer une quatrième valeur intermédiaire $d_2$ égale à $c_1 + b_5$ ;

à déterminer une quatrième valeur intermédiaire $d_3$ égale à $c_0 - b_4$ ;

à déterminer une quatrième valeur intermédiaire $d_4$ égale à $ci - b_5$ ;

à multiplier $b_2$ par la constante $2\cos(\pi/4)$ pour obtenir une cinquième valeur intermédiaire $e_0$ ;

à déterminer une sixième valeur intermédiaire $f_0$ égale à $b_0 + b_1$;

à déterminer une sixième valeur intermédiaire $f_1$ égale à $b_0 - b_1$;

à déterminer une sixième valeur intermédiaire $f_2$ égale à $e_0 + d_0$ ;

à déterminer une sixième valeur intermédiaire $f_3$ égale à $eo - d_0$ ;

à déterminer une sixième valeur intermédiaire $f_4$ égale à $d_1 + d_2$ ;

à déterminer une sixième valeur intermédiaire $f_5$ égale à $d_3 + d_4$ ;

à multiplier $d_1$ par la constante $2\cos(\pi/8)$ pour obtenir une septième valeur intermédiaire $go$ ;

à multiplier $d_3$ par la constante $2\cos(3\pi/8)$ pour obtenir une septième valeur intermédiaire $g_1$ ;

à déterminer une huitième valeur intermédiaire $h_0$ égale à $g_0 + f_4$ ;

à déterminer une huitième valeur intermédiaire $h_1$ égale à $g_0 - f_4$ ;

à déterminer une huitième valeur intermédiaire $h_2$ égale à $g_1 + f_5$ ;

à déterminer une huitième valeur intermédiaire $h_3$ égale à $g_1 - f_5$ ;

à multiplier $f_1$ par la constante 7/8 pour obtenir une sortie $OUT_4$ ;

à décaler $f_2$ pour obtenir une sortie $OUT_2$ ;

à multiplier $h_0$ par la constante $1/4\cos(\pi/8)$ pour obtenir une sortie $OUT_1$ ;

à multiplier $h_2$ par la constante $1/2\cos(\pi/4)$ pour obtenir une sortie $OUT_3$ ; et

à sortir les sorties $OUT_1$ à $OUT_4$, $f_0$, $f_3$, $h_1$ et $h_3$, représentant des représentations numériques comprimées, pondérées, d'une image.

3. Système de compression de données pour effectuer une compression de données dans un codeur vidéo numérique, dans lequel on combine les fonctions de transformation cosinus discrète et de pondération, le système comprenant :

un dispositif (800) d'entrée destiné à recevoir une pluralité de composantes d'entrée représentant de l'information de pixels d'une image ;

un premier processeur (810) destiné à déterminer un premier groupe de valeurs intermédiaires en combinant des sous-ensembles des composantes d'entrée ;

un deuxième processeur (820) destiné à déterminer un deuxième groupe de valeurs intermédiaires en combinant un premier sous-ensemble des composantes d'entrée et le premier groupe de valeurs intermédiaires ;

un troisième processeur (830) destiné à déterminer un troisième groupe de valeurs intermédiaires en combinant un deuxième sous-ensemble des composantes d'entrée et les premier et deuxième groupes de valeurs intermédiaires avec un premier ensemble de constantes prédéterminées, chaque constante prédéterminée étant une fonction de coefficients cosinus discrets et de constantes de pondération de vidéo numérique ;

un quatrième processeur (840) destiné à déterminer un quatrième groupe de valeurs intermédiaires en combinant un troisième sous-ensemble des composantes d'entrée et les premier, deuxième et troisième groupes de valeurs intermédiaires ;

un cinquième processeur (850) destiné à déterminer un cinquième groupe de valeurs intermédiaires en combinant un quatrième sous-ensemble des composantes d'entrée et les premier, deuxième, troisième et quatrième groupes de valeurs intermédiaires avec un deuxième ensemble de constantes prédéterminées, chaque constante prédéterminée étant une fonction de coefficients cosinus discrets et de constantes de pondération de vidéo numérique ;

un sixième processeur (860) destiné à déterminer un sixième groupe de valeurs intermédiaires en combinant un cinquième sous-ensemble des composantes d'entrée et les premier, deuxième, troisième, quatrième et cinquième groupes de valeurs intermédiaires ;

un septième processeur (870) destiné à déterminer un septième groupe de valeurs intermédiaires en combinant un sixième sous-ensemble des composantes d'entrée et les premier, deuxième, troisième, quatrième, cinquième et sixième groupes de valeurs intermédiaires avec un troisième ensemble de constantes prédéterminées, chaque constante prédéterminée étant une fonction de coefficients cosinus discrets et de constantes de pondération de vidéo numérique ;

un huitième processeur (880) destiné à déterminer un huitième groupe de valeurs intermédiaires en combinant un septième sous-ensemble des composantes d'entrée et les premier, deuxième, troisième, quatrième, cinquième, sixième et septième groupes de valeurs intermédiaires ;

un neuvième processeur (890) destiné à déterminer des composantes de sortie en combinant un huitième sous-ensemble des composantes d'entrée et les premier, deuxième, troisième, quatrième, cinquième, sixième, septième et huitième groupes de valeurs intermédiaires avec un quatrième ensemble de constantes prédéterminées, chaque constante prédéterminée étant une fonction de coefficients cosinus discrets et de constantes de pondération de vidéo numérique ; et

un dispositif de sortie destiné à délivrer les composantes de sortie à une borne de sortie en tant que représentations numériques comprimées, pondérées, d'une image.

**4.** Système de compression de données selon la revendication 3, comprenant :

un dispositif (720) d'entrée destiné à recevoir huit valeurs d'entrée, $IN_0$ à $IN_7$, représentant de l'information de pixels d'une image ;

un processeur (710) destiné à effectuer les déterminations suivantes consistant :

à déterminer une première valeur intermédiaire $a_0$ égale à $IN_0 + IN_7$ ;
à déterminer une première valeur intermédiaire $a_1$ égale à $IN_1 + IN_6$ ;
à déterminer une première valeur intermédiaire $a_2$ égale à $IN_2 + IN_5$ ;
à déterminer une première valeur intermédiaire $a_3$ égale à $IN_3 + IN_4$ ;
à déterminer une première valeur intermédiaire $a_4$ égale à $IN_0 - IN_7$ ;
à déterminer une première valeur intermédiaire $a_5$ égale à $IN_1 - IN_6$ ;
à déterminer une première valeur intermédiaire $a_6$ égale à $IN_2 - IN_5$ ;
à déterminer une première valeur intermédiaire $a_7$ égale à $IN_3 - IN_4$ ;
à déterminer une deuxième valeur intermédiaire $b_0$ égale à $a_0 + a_3$ ;
à déterminer une deuxième valeur intermédiaire $b_1$ égale à $a_1 + a_2$ ;
à déterminer une deuxième valeur intermédiaire $b_2$ égale à $a_0 - a_3$ ;
à déterminer une deuxième valeur intermédiaire $b_3$ égale à $a_1 - a_2$ ;
à déterminer une deuxième valeur intermédiaire $b_4$ égale à $a_5 + a_6$ ;
à déterminer une deuxième valeur intermédiaire $b_5$ égale à $a_4 + a_7$ ;
à multiplier $a_4$ par la constante $2Cos(\pi/4)$ pour obtenir une troisième valeur intermédiaire $c_0$ ;
à multiplier $a_5$ par la constante $2Cos(\pi/4)$ pour obtenir une troisième valeur intermédiaire $c_1$ ;
à déterminer une quatrième valeur intermédiaire $d_0$ égale à $b_2 + b_3$ ;
à déterminer une quatrième valeur intermédiaire $d_1$ égale à $c_0 + b_4$ ;
à déterminer une quatrième valeur intermédiaire $d_2$ égale à $c_1 + b_5$ ;
à déterminer une quatrième valeur intermédiaire $d_3$ égale à $c_0 - b_4$ ;
à déterminer une quatrième valeur intermédiaire $d_4$ égale à $c_1 - b_5$ ;
à multiplier $b_2$ par la constante $2Cos(\pi/4)$ pour obtenir une cinquième valeur intermédiaire $e_0$ ;
à déterminer une sixième valeur intermédiaire $f_0$ égale à $b_0 + b_1$;
à déterminer une sixième valeur intermédiaire $f_1$ égale à $b_0 - b_1$ ;
à déterminer une sixième valeur intermédiaire $f_2$ égale à $e_0 + d_0$ ;
à déterminer une sixième valeur intermédiaire $f_3$ égale à $e_0 - d_0$ ;
à déterminer une sixième valeur intermédiaire $f_4$ égale à $d_1 + d_2$ ;
à déterminer une sixième valeur intermédiaire $f_5$ égale à $d_3 + d_4$ ;
à multiplier $d_1$ par la constante $2Cos(\pi/8)$ pour obtenir une septième valeur intermédiaire $g_0$ ;
à multiplier $d_3$ par la constante $2Cos(\pi/8)$ pour obtenir une septième valeur intermédiaire $g_1$ ;
à déterminer une huitième valeur intermédiaire $h_0$ égale à $g_0 + f_4$ ;
à déterminer une huitième valeur intermédiaire $h_1$ égale à $g_0 - f_4$ ;
à déterminer une huitième valeur intermédiaire $h_2$ égale à $g_1 + f_5$ ;
à déterminer une huitième valeur intermédiaire $h_3$ égale à $g_1 - f_5$ ;
à multiplier $f_1$ par la constante $7/8$ pour obtenir une sortie $OUT_4$ ;
à décaler $f_2$ pour obtenir une sortie $OUT_2$ ;

à multiplier $h_0$ par la constante $1/4Cos(\pi/8)$ pour obtenir une sortie $OUT_1$ ;
à multiplier $h_2$ par la constante $1/2Cos(\pi/4)$ pour obtenir une sortie $OUT_3$ ; et

un dispositif (720) de sortie destiné à sortir les sorties $OUT_1$ à $OUT_4$, $f_0$, $f_3$, $h_1$ et $h_3$, représentant des représentations numériques comprimées, pondérées, d'une image.

**5.** Procédé d'exécution d'une décompression de données dans un décodeur vidéo numérique, dans lequel on combine les fonctions de transformation cosinus discrète inverse et de pondération, le procédé comprenant les étapes effectuées par un processeur consistant :

à recevoir une pluralité de composantes d'entrée représentant des représentations numériques comprimées, pondérées, d'une image ;
à déterminer un premier groupe de valeurs intermédiaires en combinant des composantes d'entrée choisies avec un premier ensemble de constantes prédéterminées, chaque constante prédéterminée étant une fonction de coefficients cosinus discrets et de constantes de pondération de vidéo numérique ;
à déterminer un deuxième groupe de valeurs intermédiaires en combinant un premier sous-ensemble des composantes d'entrée et le premier groupe de valeurs intermédiaires ;
à déterminer un troisième groupe de valeurs intermédiaires en combinant un deuxième sous-ensemble des composantes d'entrée et les premier et deuxième groupes de valeurs intermédiaires avec un deuxième ensemble de constantes prédéterminées, chaque constante prédéterminée étant une fonction de coefficients cosinus discrets et de constantes de pondération de vidéo numérique ;
à déterminer un quatrième groupe de valeurs intermédiaires en combinant un troisième sous-ensemble des composantes d'entrée et les premier, deuxième et troisième groupes de valeurs intermédiaires ;
à déterminer un cinquième groupe de valeurs intermédiaires en combinant un quatrième sous-ensemble des composantes d'entrée et les premier, deuxième, troisième et quatrième groupes de valeurs intermédiaires ;
à déterminer un sixième groupe de valeurs intermédiaires en combinant un cinquième sous-ensemble des composantes d'entrée et les premier, deuxième, troisième, quatrième et cinquième groupes de valeurs intermédiaires avec un troisième ensemble de constantes prédéterminées, chaque constante prédéterminée étant une fonction de coefficients cosinus discrets et de constantes de pondération de vidéo numérique ;
à déterminer un septième groupe de valeurs intermédiaires en combinant un sixième sous-ensemble des composantes d'entrée et les premier, deuxième, troisième, quatrième, cinquième et sixième groupes de valeurs intermédiaires ;
à déterminer des composantes de sortie en combinant un septième sous-ensemble des composantes d'entrée et les premier, deuxième, troisième, quatrième, cinquième, sixième et septième groupes de valeurs intermédiaires ; et
à délivrer les composantes de sortie en tant qu'information de pixels décomprimée d'une image.

**6.** Procédé d'exécution d'une décompression de données selon la revendication 5, le procédé comprenant les opérations consistant :

à recevoir huit valeurs d'entrée, $IN_0$ à $IN_7$, représentant des représentations numériques d'une image ;
à déterminer une première valeur intermédiaire $a_0$ en multipliant $IN_4$ par la constante 8/7 ;
à déterminer une première valeur intermédiaire $a_1$ en décalant $IN_2$ ;
à déterminer une première valeur intermédiaire $a_2$ en multipliant $IN_1$ par la constante $4Cos(\pi/8)$ ;
à déterminer une première valeur intermédiaire $a_3$ en multipliant $IN_3$ par la constante $2Cos(\pi/4)$ ;
à déterminer une deuxième valeur intermédiaire $b_0$ égale à $IN_0 + a_0$ ;
à déterminer une deuxième valeur intermédiaire $b_1$ égale à $IN_0 - a_0$ ;
à déterminer une deuxième valeur intermédiaire $b_2$ égale à $a_1 + IN_6$ ;
à déterminer une deuxième valeur intermédiaire $b_3$ égale à $a_1 - IN_6$ ;
à déterminer une deuxième valeur intermédiaire $b_4$ égale à $a_2 + IN_7$ ;
à déterminer une deuxième valeur intermédiaire $b_5$ égale à $a_2 - IN_7$ ;
à déterminer une deuxième valeur intermédiaire $b_6$ égale à $a_3 + IN_5$ ;
à déterminer une deuxième valeur intermédiaire $b_7$ égale à $a_3 - IN_5$ ;
à déterminer une troisième valeur intermédiaire $c_0$ en multipliant $b_2$ par la constante $Cos(\pi/4)$ ;
à déterminer une troisième valeur intermédiaire $c_1$ en multipliant $b_4$ par la constante $2Cos(3\pi/8)Cos(\pi/4)$ ;
à déterminer une troisième valeur intermédiaire $c_2$ en multipliant $b_6$ par la constante $2Cos(\pi/8)Cos(\pi/4)$ ;
à déterminer une quatrième valeur intermédiaire $d_0$ égale à $b_3 - c_0$ ;
à déterminer une quatrième valeur intermédiaire $d_1$ égale à $b_5 - c_1$ ;

à déterminer une quatrième valeur intermédiaire $d_2$ égale à $b_7 - c_2$ ;

à déterminer une cinquième valeur intermédiaire $e_0$ égale à $b_0 + c_0$ ;

à déterminer une cinquième valeur intermédiaire $e_1$ égale à $b_1 + d_0$ ;

à déterminer une cinquième valeur intermédiaire $e_2$ égale à $b_0 - c_0$ ;

à déterminer une cinquième valeur intermédiaire $e_3$ égale à $b_1 - d_0$ ;

à déterminer une cinquième valeur intermédiaire $e_4$ égale à $c_1 + c_2$ ;

à déterminer une cinquième valeur intermédiaire $e_5$ égale à $d_1 + d_2$ ;

à déterminer une cinquième valeur intermédiaire $e_6$ égale à $c_1 - c_2$ ;

à déterminer une cinquième valeur intermédiaire $e_7$ égale à $d_1 - d_2$ ;

à déterminer une sixième valeur intermédiaire $f_0$ en multipliant $e_4$ par la constante $Cos(\pi/4)$ ;

à déterminer une sixième valeur intermédiaire $f_1$ en multipliant $e_5$ par la constante $Cos(\pi/4)$ ;

à déterminer une septième valeur intermédiaire $g_0$ égale à $e_6 - f_1$ ;

à déterminer une septième valeur intermédiaire $g_1$ égale à $e_7 - f_0$ ;

à déterminer une sortie $OUT_0$ égale à $e_0 + f_0$ ;

à déterminer une sortie $OUT_1$ égale à $e_1 + f_1$;

à déterminer une sortie $OUT_2$ égale à $e_3 + g_0$ ;

à déterminer une sortie $OUT_3$ égale à $e_2 + g_1$ ;

à déterminer une sortie $OUT_4$ égale à $e_2 - g_1$ ;

à déterminer une sortie $OUT_5$ égale à $e_3 - g_0$ ;

à déterminer une sortie $OUT_6$ égale à $e_1 - f_1$ ;

à déterminer une sortie $OUT_7$ égale à $e_0 - f_0$ ; et

à sortir les sorties $OUT_0$ à $OUT_7$ représentant de l'information de pixels d'une image.

7. Système de décompression de données destiné à effectuer une décompression de données dans un décodeur vidéo numérique, dans lequel on combine les fonctions de transformation cosinus discrète inverse et de pondération, le système comprenant :

un dispositif (900) d'entrée destiné à recevoir une pluralité de composantes d'entrée représentant des représentations numériques comprimées, pondérées, d'une image ;

un premier processeur (910) destiné à déterminer un premier groupe de valeurs intermédiaires en combinant des composantes d'entrée choisies avec un premier ensemble de constantes prédéterminées, chaque constante prédéterminée étant une fonction de coefficients cosinus discrets et de constantes de pondération de vidéo numérique ;

un deuxième processeur (920) destiné à déterminer un deuxième groupe de valeurs intermédiaires en combinant un premier sous-ensemble des composantes d'entrée et le premier groupe de valeurs intermédiaires ;

un troisième processeur (930) destiné à déterminer un troisième groupe de valeurs intermédiaires en combinant un deuxième sous-ensemble des composantes d'entrée et les premier et deuxième groupes de valeurs intermédiaires avec un deuxième ensemble de constantes prédéterminées, chaque constante prédéterminée étant une fonction de coefficients cosinus discrets et de constantes de pondération de vidéo numérique ;

un quatrième processeur (940) destiné à déterminer un quatrième groupe de valeurs intermédiaires en combinant un troisième sous-ensemble des composantes d'entrée et les premier, deuxième et troisième groupes de valeurs intermédiaires ;

un cinquième processeur (950) destiné à déterminer un cinquième groupe de valeurs intermédiaires en combinant un quatrième sous-ensemble des composantes d'entrée et les premier, deuxième, troisième et quatrième groupes de valeurs intermédiaires ;

un sixième processeur (960) destiné à déterminer un sixième groupe de valeurs intermédiaires en combinant un cinquième sous-ensemble des composantes d'entrée et les premier, deuxième, troisième, quatrième et cinquième groupes de valeurs intermédiaires avec un troisième ensemble de constantes prédéterminées, chaque constante prédéterminée étant une fonction de coefficients cosinus discrets et de constantes de pondération de vidéo numérique ;

un septième processeur (970) destiné à déterminer un septième groupe de valeurs intermédiaires en combinant un sixième sous-ensemble des composantes d'entrée et les premier, deuxième, troisième, quatrième, cinquième et sixième groupes de valeurs intermédiaires ;

un huitième processeur (980) destiné à déterminer des composantes de sortie en combinant un septième sous-ensemble des composantes d'entrée et les premier, deuxième, troisième, quatrième, cinquième, sixième et septième groupes de valeurs intermédiaires ; et

un dispositif (990) de sortie destiné à délivrer les composantes de sortie en tant qu'information de pixels décomprimée d'une image.

**8.** Système de décompression de données selon la revendication 7, le système comprenant :

un dispositif (720) d'entrée destiné à recevoir huit valeurs d'entrée, $IN_0$ à $IN_7$, représentant des représentations numériques d'une image ;

un processeur (710) destiné à effectuer les déterminations suivantes consistant :

à déterminer une première valeur intermédiaire $a_0$ en multipliant $IN_4$ par la constante 8/7 ;
à déterminer une première valeur intermédiaire $a_1$ en décalant $IN_2$ ;
à déterminer une première valeur intermédiaire $a_2$ en multipliant $IN_1$ par la constante $4\mathrm{Cos}(\pi/8)$ ;
à déterminer une première valeur intermédiaire $a_3$ en multipliant $IN_3$ par la constante $2\mathrm{Cos}(\pi/4)$ ;
à déterminer une deuxième valeur intermédiaire $b_0$ égale à $IN_0 + a_0$ ;
à déterminer une deuxième valeur intermédiaire $b_1$ égale à $IN_0 - a_0$ ;
à déterminer une deuxième valeur intermédiaire $b_2$ égale à $a_1 + IN_6$;
à déterminer une deuxième valeur intermédiaire $b_3$ égale à $a_1 - IN_6$ ;
à déterminer une deuxième valeur intermédiaire $b_4$ égale à $a_2 + IN_7$;
à déterminer une deuxième valeur intermédiaire $b_5$ égale à $a_2 - IN_7$ ;
à déterminer une deuxième valeur intermédiaire $b_6$ égale à $a_3 + IN_5$ ;
à déterminer une deuxième valeur intermédiaire $b_7$ égale à $a_3 - IN_5$;
à déterminer une troisième valeur intermédiaire $c_0$ en multipliant $b_2$ par la constante $\mathrm{Cos}(\pi/4)$ ;
à déterminer une troisième valeur intermédiaire $c_1$ en multipliant $b_4$ par la constante $2\mathrm{Cos}(3\pi/8)\mathrm{Cos}(\pi/4)$ ;
à déterminer une troisième valeur intermédiaire $c_2$ en multipliant $b_6$ par la constante $2\mathrm{Cos}(\pi/8)\mathrm{Cos}(\pi/4)$ ;
à déterminer une quatrième valeur intermédiaire $d_0$ égale à $b_3 - c_0$ ;
à déterminer une quatrième valeur intermédiaire $d_1$ égale à $b_5 - c_1$ ; à déterminer une quatrième valeur intermédiaire $d_2$ égale à $b_7 - c_2$ ;
à déterminer une cinquième valeur intermédiaire $e_0$ égale à $b_0 + c_0$ ;
à déterminer une cinquième valeur intermédiaire $e_1$ égale à $b_1 + d_0$ ;
à déterminer une cinquième valeur intermédiaire $e_2$ égale à $b_0 - c_0$ ;
à déterminer une cinquième valeur intermédiaire $e_3$ égale à $b_1 - d_0$ ;
à déterminer une cinquième valeur intermédiaire $e_4$ égale à $c_1 + c_2$ ;
à déterminer une cinquième valeur intermédiaire $e_5$ égale à $d_1 + d_2$ ;
à déterminer une cinquième valeur intermédiaire $e_6$ égale à $c_1 - c_2$ ;
à déterminer une cinquième valeur intermédiaire $e_7$ égale à $d_1 - d_2$ ;
à déterminer une sixième valeur intermédiaire $f_0$ en multipliant $e_4$ par la constante $\mathrm{Cos}(\pi/4)$ ;
à déterminer une sixième valeur intermédiaire $f_1$ en multipliant $e_5$ par la constante $\mathrm{Cos}(\pi/4)$ ;
à déterminer une septième valeur intermédiaire $g_0$ égale à $e_6 - f_1$ ;
à déterminer une septième valeur intermédiaire $g_1$ égale à $e_7 - f_0$ ;
à déterminer une sortie $OUT_0$ égale à $e_0 + f_0$ ;
à déterminer une sortie $OUT_1$ égale à $e_1 + f_1$ ;
à déterminer une sortie $OUT_2$ égale à $e_3 + g_0$ ;
à déterminer une sortie $OUT_3$ égale à $e_2 + g_1$ ;
à déterminer une sortie $OUT_4$ égale à $e_2 - g_1$;
à déterminer une sortie $OUT_5$ égale à $e_3 - g_0$ ;
à déterminer une sortie $OUT_6$ égale à $e_1 - f_1$ ;
à déterminer une sortie $OUT_7$ égale à $e_0 - f_0$ ; et

un dispositif (710) de sortie destiné à sortir les sorties, $OUT_0$ à $OUT_7$, représentant de l'information de pixels d'une image.

**9.** Procédé d'exécution d'une compression de données dans un codeur vidéo numérique, dans lequel on combine les fonctions de transformation cosinus discrète et de pondération, le procédé comprenant les étapes effectuées par un processeur consistant :

à recevoir une pluralité de composantes d'entrée représentant de l'information de pixels d'une image ;
à déterminer un premier groupe de valeurs intermédiaires en combinant des sous-ensembles des composantes d'entrée ;
à déterminer un deuxième groupe de valeurs intermédiaires en combinant un premier sous-ensemble des composantes d'entrée et le premier groupe de valeurs intermédiaires ;
à déterminer un troisième groupe de valeurs intermédiaires en combinant un deuxième sous-ensemble des composantes d'entrée et les premier et deuxième groupes de valeurs intermédiaires avec des constantes prédéterminées, chaque constante prédéterminée étant une fonction de coefficients cosinus discrets et de constantes de pondération de vidéo numérique ;

à déterminer un quatrième groupe de valeurs intermédiaires en combinant un troisième sous-ensemble des composantes d'entrée et les premier, deuxième et troisième groupes de valeurs intermédiaires ;

à déterminer des composantes de sortie en combinant un quatrième sous-ensemble des composantes d'entrée et les premier, deuxième, troisième et quatrième groupes de valeurs intermédiaires avec un deuxième ensemble de constantes prédéterminées, chaque constante prédéterminée étant une fonction de coefficients cosinus discrets et de constantes de pondération de vidéo numérique ; et

à sortir les composantes de sortie représentant des représentations numériques comprimées, pondérées, d'une image.

**10.** Procédé d'exécution d'une compression de données selon la revendication 9, le procédé comprenant les étapes effectuées par un processeur consistant :

à recevoir quatre valeurs d'entrée, $IN_0$ à $IN_3$, représentant des représentations numériques d'une image ;

à déterminer une première valeur intermédiaire $a_0$ égale à $IN_0 + IN_3$ ;

à déterminer une première valeur intermédiaire $a_1$ égale à $IN_1 + IN_2$ ;

à déterminer une première valeur intermédiaire $a_2$ égale à $IN_0 - IN_3$ ;

à déterminer une première valeur intermédiaire $a_3$ égale à $IN_1 - IN_2$ ;

à déterminer une deuxième valeur intermédiaire $b_0$ égale à $a_2 + a_3$ ;

à déterminer une troisième valeur intermédiaire $c_0$ en multipliant $a_2$ par la constante 2 ;

à déterminer une quatrième valeur intermédiaire $d_0$ égale à $a_0 + a_1$ ;

à déterminer une quatrième valeur intermédiaire $d_1$ égale à $a_0 - a_i$ ;

à déterminer une quatrième valeur intermédiaire $d_2$ égale à $c_0 + b_0$ ;

à déterminer une quatrième valeur intermédiaire $d_3$ égale à $c_0 - b_0$ ;

à déterminer une sortie $OUT_0$ égale à $d_0$ ;

à déterminer une sortie $OUT_1$ an décalant $d_2$ ;

à déterminer une sortie $OUT_2$ en multipliant $d_1$ par la constante 7/8 ;

à déterminer une sortie $OUT_3$ égale à $d_3$ ; et

à sortir les sorties $OUT_1$ à $OUT_3$ représentant des représentations numériques comprimées, pondérées, d'une image.

**11.** Système de compression de données pour effectuer une compression de données dans un codeur vidéo numérique, dans lequel on combine les fonctions de transformation cosinus discrète et de pondération, le système comprenant :

un dispositif (1000) d'entrée destiné à recevoir une pluralité de composantes d'entrée représentant de l'information de pixels d'une image ;

un premier processeur (1010) destiné à déterminer un premier groupe de valeurs intermédiaires en combinant des sous-ensembles des composantes d'entrée ;

un deuxième processeur (1020) destiné à déterminer un deuxième groupe de valeurs intermédiaires en combinant un premier sous-ensemble des composantes d'entrée et le premier groupe de valeurs intermédiaires ;

un troisième processeur (1030) destiné à déterminer un troisième groupe de valeurs intermédiaires en combinant un deuxième sous-ensemble des composantes d'entrée et les premier et deuxième groupes de valeurs intermédiaires avec des constantes prédéterminées, chaque constante prédéterminée étant une fonction de coefficients cosinus discrets et de constantes de pondération de vidéo numérique ;

un quatrième processeur (1040) destiné à déterminer un quatrième groupe de valeurs intermédiaires en combinant un troisième sous-ensemble des composantes d'entrée et les premier, deuxième et troisième groupes de valeurs intermédiaires ;

un cinquième processeur (1050) destiné à déterminer des composantes de sortie en combinant un quatrième sous-ensemble des composantes d'entrée et les premier, deuxième, troisième et quatrième groupes de valeurs intermédiaires avec des constantes prédéterminées, chaque constante prédéterminée étant une fonction de coefficients cosinus discrets et de constantes de pondération de vidéo numérique ; et

un dispositif (1090) de sortie destiné à sortir les composantes de sortie en tant que représentations numériques comprimées, pondérées, d'une image.

**12.** Système de compression de données selon la revendication 11, le système comprenant :

un dispositif (720) d'entrée destiné à recevoir quatre valeurs d'entrée, $IN_0$ à $IN_3$, représentant des composantes de pixels d'une image ;

un processeur (710) destiné à effectuer les déterminations suivantes consistant :

à recevoir quatre valeurs d'entrée, $IN_0$ à $IN_3$, représentant des représentations numériques d'une image

à déterminer une première valeur intermédiaire $a_0$ égale à $IN_0 + IN_3$ ;

à déterminer une première valeur intermédiaire $a_1$ égale à $IN_1 + IN_2$ ;

à déterminer une première valeur intermédiaire $a_2$ égale à $IN_0 - IN_3$ ;

à déterminer une première valeur intermédiaire $a_3$ égale à $IN_1 - IN_2$ ;

à déterminer une deuxième valeur intermédiaire $b_0$ égale à $a_2 + a_3$ ;

à déterminer une troisième valeur intermédiaire $c_0$ en multipliant $a_2$ par la constante 2 ;

à déterminer une quatrième valeur intermédiaire do égale à $a_0 + a_1$ ;

à déterminer une quatrième valeur intermédiaire $d_1$ égale à $a_0 - a_1$ ;

à déterminer une quatrième valeur intermédiaire $d_2$ égale à $c_0 + b_0$ ;

à déterminer une quatrième valeur intermédiaire $d_3$ égale à $c_0 - b_0$ ;

à déterminer une sortie $OUT_0$ égale à $d_0$ ;

à déterminer une sortie $OUT_1$ en décalant $d_2$ ;

à déterminer une sortie $OUT_2$ en multipliant $d_1$ par la constant 7/8 ; et

à déterminer une sortie $OUT_3$ égale à $d_3$ ; et

un dispositif (720) de sortie destiné à sortir $OUT_1$ à $OUT_3$, représentant des représentations numériques comprimées, pondérées, d'une image.

**13.** Procédé d'exécution d'une décompression de données dans un décodeur vidéo numérique, dans lequel on combine les fonctions de transformation cosinus discrète inverse et de pondération, le procédé comprenant les étapes effectuées par un processeur consistant :

à recevoir une pluralité de composantes d'entrée représentant des représentations numériques comprimées, pondérées, d'une image ;

à déterminer un premier groupe de valeurs intermédiaires en combinant un sous-ensemble des composantes d'entrée avec un premier ensemble de constantes prédéterminées, chaque constante prédéterminée étant une fonction de coefficients cosinus discrets et de constantes de pondération de vidéo numérique ;

à déterminer un deuxième groupe de valeurs intermédiaires en combinant un premier sous-ensemble des composantes d'entrée et le premier groupe de valeurs intermédiaires ;

à déterminer un troisième groupe de valeurs intermédiaires en combinant un deuxième sous-ensemble des composantes d'entrée et les premier et deuxième groupes de valeurs intermédiaires avec des constantes prédéterminées, chaque constante prédéterminée étant une fonction de coefficients cosinus discrets et de constantes de pondération de vidéo numérique ;

à déterminer un quatrième groupe de valeurs intermédiaires en combinant un troisième sous-ensemble des composantes d'entrée et les premier, deuxième et troisième groupes de valeurs intermédiaires ;

à déterminer des composantes de sortie en combinant un quatrième sous-ensemble des composantes d'entrée et les premier, deuxième, troisième et quatrième groupes de valeurs intermédiaires ; et

à sortir les composantes de sortie représentant de l'information de pixels d'une image.

**14.** Procédé d'exécution d'une décompression de données selon la revendication 13, le procédé comprenant les étapes effectuées par un processeur consistant :

à recevoir quatre valeurs d'entrée, $IN_0$ à $IN_3$, représentant des représentations numériques comprimées, pondérées, d'une image ;

à déterminer une première valeur intermédiaire $a_0$ en décalant $IN_1$ ;

à déterminer une première valeur intermédiaire $a_1$ en multipliant $a_0$ par la constante 8/7 ;

à déterminer une deuxième valeur intermédiaire $b_0$ égale à $IN_0 + a_1$;

à déterminer une deuxième valeur intermédiaire $b_1$ égale à $a_0 + IN_3$ ;

à déterminer une deuxième valeur intermédiaire $b_2$ égale à $IN_0 - a_1$ ;

à déterminer une deuxième valeur intermédiaire $b_3$ égale à $a_0 - IN_3$ ;

à déterminer une troisième valeur intermédiaire $c_0$ en multipliant $b_2$ par la constante 1/2 ;

à déterminer une quatrième valeur intermédiaire $d_0$ égale à $b_1 - b_3$ ;

à déterminer une sortie $OUT_0$ égale à $b_0 + b_1$ ;

à déterminer une sortie $OUT_1$ égale à $b_0 - b_1$ ;
à déterminer une sortie $OUT_2$ égale à $c_0 + d_0$ ;
à déterminer une sortie $OUT_3$ égale à $c_0 - d_0$ ;
à combiner les sorties $OUT_0$ à $OUT_3$ pour former de l'information de pixels décomprimée d'une image.

**15.** Système de décompression de données destiné à effectuer une décompression de données dans un décodeur vidéo numérique, dans lequel on combine les fonctions de transformation cosinus discrète inverse et de pondération, le système comprenant :

un dispositif (1100) d'entrée destiné à recevoir une pluralité de composantes d'entrée représentant des représentations numériques comprimées, pondérées, d'une image ;
un premier processeur (1110) destiné à déterminer un premier groupe de valeurs intermédiaires en combinant un sous-ensemble des composantes d'entrée choisies avec un premier ensemble de constantes prédéterminées, chaque constante prédéterminée étant une fonction de coefficients cosinus discrets et de constantes de pondération de vidéo numérique ;
un deuxième processeur (1120) destiné à déterminer un deuxième groupe de valeurs intermédiaires en combinant un premier sous-ensemble des composantes d'entrée et le premier groupe de valeurs intermédiaires ;
un troisième processeur (1130) destiné à déterminer un troisième groupe de valeurs intermédiaires en combinant un deuxième sous-ensemble des composantes d'entrée et les premier et deuxième groupes de valeurs intermédiaires avec le deuxième ensemble de constantes prédéterminées, chaque constante prédéterminée étant une fonction de coefficients cosinus discrets et de constantes de pondération de vidéo numérique ;
un quatrième processeur (1140) destiné à déterminer un quatrième groupe de valeurs intermédiaires en combinant un troisième sous-ensemble des composantes d'entrée et les premier, deuxième et troisième groupes de valeurs intermédiaires ;
un cinquième processeur (1150) destiné à déterminer des composantes de sortie en combinant un quatrième sous-ensemble des composantes d'entrée et les premier, deuxième, troisième et quatrième groupes de valeurs intermédiaires ; et
un dispositif (1190) de sortie destiné à sortir les composantes de sortie représentant des composantes de pixels décomprimées d'une image.

**16.** Système de décompression de données selon la revendication 15, le système comprenant :

un dispositif (720) d'entrée destiné à recevoir quatre valeurs d'entrée, $IN_0$ à. $IN_3$, représentant des représentations numériques comprimées, pondérées, d'une image ;
un processeur (710) destiné à effectuer les déterminations suivantes consistant :

à déterminer une première valeur intermédiaire $a_0$ en décalant $IN_1$ ;
à déterminer une première valeur intermédiaire $a_1$ en multipliant $a_0$ par la constante 8/7 ;
à déterminer une deuxième valeur intermédiaire $b_0$ égale à $IN_0 + a_1$ ;
à déterminer une deuxième valeur intermédiaire $b_1$ égale à $a_0 + IN_3$ ;
à déterminer une deuxième valeur intermédiaire $b_2$ égale à $IN_0 - a_1$ ;
à déterminer une deuxième valeur intermédiaire $b_3$ égale à $a_0 - IN_3$ ;
à déterminer une troisième valeur intermédiaire $c_0$ en multipliant $b_2$ par la constante 1/2 ;
à déterminer une quatrième valeur intermédiaire $d_0$ égale à $b_1 - b_3$ ;
à déterminer une sortie $OUT_0$ égale à $b_0 + b_1$ ;
à déterminer une sortie $OUT_1$ égale à $b_0 - b_1$ ;
à déterminer une sortie $OUT_2$ égale à $c_0 + d_0$ ;
à déterminer une sortie $OUT_3$ égale à $c_0 - d_0$ ; et

un dispositif (710) de sortie destiné à délivrer les sorties $OUT_0$ à $OUT_7$ représentant les composantes de pixels décomprimées d'une image.

Fig. 1

# Fig. 2

FIG. 3

FIG. 4

FIG. 5

FIG. 6

```
┌─────────────────┐          ┌─────────────────┐
│    Processor    │          │  Input/Output   │
│                 │          │     Device      │
│           710   │          │           720   │
└────────┬────────┘          └────────┬────────┘
         │                            │
System  760                           │
Bus ◄────────────────────────┬────────────────────────
         │                   │
         ▼                   ▼
┌─────────────────┐  ┌─────────────────┐      ┌─────────────────┐
│     Memory      │  │    Graphics     │      │     Monitor     │
│                 │  │      Card       │─────►│                 │
│           730   │  │           740   │      │           750   │
└─────────────────┘  └─────────────────┘      └─────────────────┘
```

# FIG. 7

EP 0 917 070 B1

Input Device

800

Processor

Arithmetic Logic Unit
815

810

Processor

Arithmetic Logic Unit
825

820

Processor

Multiplier
832

Shift Register
834

830

Processor

Multiplier
872

Shift Register
874

870

Processor

Arithmetic Logic Unit
865

860

Processor

Multiplier
852

Shift Register
854

850

Processor

Arithmetic Logic Unit
845

840

Processor

Arithmetic Logic Unit
885

880

Processor

Multiplier
892

Shift Register
894

890

Output Device

896

FIG. 8

FIG. 9

EP 0 917 070 B1

```
┌──────────────┐       ┌─────────────────────────────┐       ┌─────────────────────────┐       ┌─────────────────────────────┐
│              │       │          Processor          │       │        Processor        │       │          Processor          │
│ Input Device │       │ ┌──────────┐ ┌────────────┐ │       │ ┌─────────────────────┐ │       │ ┌──────────┐ ┌────────────┐ │
│              │──────▶│ │Multiplier│ │Shift Register│ │──────▶│ │  Arithmetic Logic   │ │──────▶│ │Multiplier│ │Shift Register│ │
│              │       │ │          │ │            │ │       │ │        Unit         │ │       │ │          │ │            │ │
│    1000      │       │ │   1012   │ │    1014    │ │       │ │        1025         │ │       │ │   1032   │ │    1034    │ │
│              │       │ └──────────┘ └────────────┘ │       │ └─────────────────────┘ │       │ └──────────┘ └────────────┘ │
│              │       │                      1010    │       │                   1020  │       │                      1030    │
└──────────────┘       └─────────────────────────────┘       └─────────────────────────┘       └─────────────────────────────┘
```

FIG. 10

## FIG. 11

EP 0 917 070 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4385363 A, Widergren
- US 5574661 A, Cismas
- DE 4005830 A
- US 5341318 A

**Non-patent literature cited in the description**

- **C. Yamamitsu et al.** An Experimental Study for Home-Use Digital VTR. *IEEE Transactions on Consumer Electronics,* August 1989, vol. 35 (3), 450-456
- **C. Loeffler et al.** Practical Fast I-D DCT Algorithms with 11 Multiplications. *Proceedings of the IEEE International Conference on Acoustics, Speech, and Signal Processing, ICASSP-89,* 1989, 988-991